# EUROPEAN PATENT APPLICATION

(11) **EP 4 694 230 A1**
(43) Date of publication of application: **11.02.2026**
(21) Application number: 24193834.9
(22) Date of filing: 09.08.2024
(51) Int. Cl.: H04W 4/70, H04W 74/00

(54) **INTERNET OF THINGS DEVICE AND READER**

(71) Applicant: Panasonic Intellectual Property Corporation of America, Torrance, CA 90504 (US)
(72) Inventor: DHANANJAYA, Harshith, 63225 Langen (DE); SUZUKI, Hidetoshi, Osaka, 571-8501 (JP); KUANG, Quan, 63225 Langen (DE)
(74) Representative: Grünecker Patent- und Rechtsanwälte PartG mbB

(57) **Abstract**

The present disclosure relates to an Internet of Things, loT, device comprising the following. A transceiver of the loT device receives an initial trigger message from a reader, indicating a group of loT devices to be triggered for transmission. Circuitry of the loT device determines whether the loT device is triggered by the initial trigger message, based on the indicated group of loT devices and one or more groups to which the loT device is assigned. In case the circuitry determines that the loT device is triggered by the initial trigger message, the loT device performs an initial access procedure with the reader.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing an loT device to perform an improved loT communication procedure.

In an embodiment, the techniques disclosed here feature an Internet of Things, loT, device comprising the following. A transceiver of the loT device receives an initial trigger message from a reader, indicating a group of loT devices to be triggered for transmission. Circuitry of the loT device determines whether the loT device is triggered by the initial trigger message, based on the indicated group of loT devices and one or more groups to which the loT device is assigned. In case the circuitry determines that the loT device is triggered by the initial trigger message, the loT device performs an initial access procedure with the reader.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: shows exemplary functional split options in 5G O-RAN,
- **Fig. 3**: shows an overview of an A-loT system
- **Fig. 4**: illustrates a first topology of an loT communication between a base station and an loT device,
- **Fig. 5**: illustrates a second topology of an loT communication between a base station and an loT device, with an intermediate node,
- **Fig. 6**: illustrates an exemplary implementation of a D2R transmission in the first topology of Fig. 4,
- **Fig. 7**: illustrates an exemplary implementation of a D2R transmission in the second topology of Fig. 5,
- **Fig. 8**: illustrates an exemplary implementation of D2R and R2D transmissions in the second topology of Fig. 5,
- **Fig. 9**: is a signaling diagram of an exemplary 4-step loT initial access procedure,
- **Fig. 10**: is a signaling diagram of an exemplary 2-step loT initial access procedure,
- **Fig. 11**: illustrates an exemplary and simplified structure of an loT device and a reader,
- **Fig. 12 and 13**: illustrates different exemplary implementations of solutions,
- **Fig. 14**: illustrates a simplified and exemplary loT device structure according to a basic implementation of the improved loT initial access procedure of the First Solution,
- **Fig. 15**: is a sequence diagram for an exemplary loT device behaviour in line with the loT device of Fig. 14,
- **Fig. 16**: illustrates a simplified and exemplary reader structure according to an exemplary implementation of the improved loT transmission procedure of the First solution,
- **Fig. 17**: is a sequence diagram for an exemplary reader in line with the node of Fig. 16,
- **Fig. 18**: is a signaling diagram of an exemplary and simplified implementation of the improved loT initial access procedure of the First Solution,
- **Fig. 19**: illustrates a signaling diagram of an exemplary and simplified implementation of the improved loT initial access procedure of the First Solution, based on a normal (e.g. 4-step) loT initial access procedure,
- **Fig. 20**: illustrates a signaling diagram of an exemplary and simplified implementation of the improved loT initial access procedure of the First Solution, based on a shortened (e.g. 2-step) loT initial access procedure,
- **Fig. 21**: illustrates a signaling diagram of the beginning of an improved loT initial access procedure, particularly regarding the group-based triggering of loT devices using the initial trigger message of the First Solution, based on an "OR" operator
- **Fig. 22**: illustrates a signaling diagram of the beginning an improved loT initial access procedure, particularly regarding the group-based triggering of loT devices using the initial trigger message of the First Solution, based on an "AND" operator,
- **Fig. 23**: is a signaling diagram according to a variant of the First Solution using a temporary ID instead of a device ID during the improved loT initial access procedure,
- **Fig. 24**: is a signaling diagram according to a variant of the First Solution using orthogonal sequences for transmitting the loT Msg1 of the initial access procedure,
- **Fig. 25**: is a signaling diagram according to a variant of the First Solution using a trigger prohibition timer as explained above by the loT devices, for a normal (e.g. 3-step) initial access procedure,
- **Fig. 26**: is a signaling diagram according to a variant of the First Solution using a trigger prohibition timer as explained above by the loT devices, for a shortened (e.g. 2-step) initial access procedure,
- **Fig. 27**: is a signaling diagram illustrating an exemplary implementation of the Second solution, for a normal (e.g. 3-step) initial access procedure,
- **Fig. 28**: is a signaling diagram illustrating an exemplary implementation of the Second solution, for a shortened (e.g. 2-step) initial access procedure,
- **Fig. 29**: is a signaling diagram illustrating an exemplary implementation of the Second Solution, for a normal (e.g. 3-step) initial access procedure,
- **Fig. 30**: is a signaling diagram illustrating an exemplary implementation of the Second solution, for a shortened (e.g. 2-step) initial access procedure, and
- **Fig. 31**: illustrates a signaling diagram illustrating an exemplary implementation of the Third Solution.

### DETAILED DESCRIPTION

### 5G NR system architecture and protocol stacks

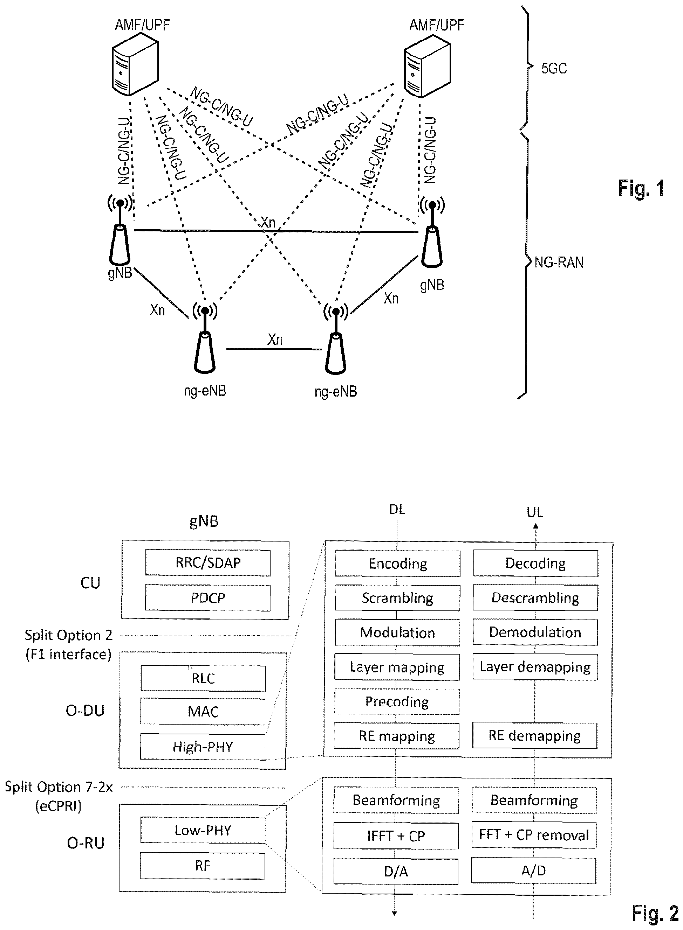

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v18.1.0, section 4).

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

FIG. 2 illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full Duplex operation may be applied to an operation in which the terminal is capable of performing sidelink transmission/reception simultaneously. Further, the Full Duplex operation may be applied to an operation in which the terminal is capable of performing sidelink transmission/reception and uplink or downlink transmission/reception simultaneously.

### Ambient IoT Devices

An ambient Internet of Things device (A-loT device) is a new type of device, introduced to be supported by 5G NR or possible later generation (e.g. 6G) technology. A-loT devices can be understood as loT devices that have the ability to harvest energy from natural or ambient sources, such as vibration, light, heat or a carrier wave (CW), e.g. provided by the base station, or the intermediate node, or a separate CW node. The energy harvesting technology can be crucial for the loT market to reduce the device operation costs. The power consumption and complexity of A-loT devices can be less compared to existing 3GPP technologies, such as MTC (machine type communication), NB-loT (NarrowBand loT), or RedCap (Reduced Capability). For instance, an ambient loT device can be operated with a small battery or without a battery and further may not require battery replenishment. Another term is "zero energy device", due to their capability to operate without a dedicated battery source. An A-loT device may be an ultra-low-complexity device with ultra-low power consumption for very-low end loT applications. Examples for A-loT devices include - without any limitation - wearables, smart home devices, automotive devices, sensors, smart keys, healthcare devices, etc.

A-loT devices may lack RRC states, such that new specifically designed operation states may have to be defined and configured for A-IoT devices. ARQ (Automatic Repeat Request) and Hybrid ARQ transmission protocols that ensure reliable data delivery may not be supported by A-loT devices. A-loT devices have limited power available, resulting in reduced time periods of communication capability. Further, full device registration with the network might be difficult for loT devices, although a simplified registration or identification might be necessary.

A-loT devices may not support mobility (e.g. no cell selection/re-selection/handover functions, as in legacy NR).

The above characteristics of an A-loT device facilitates the wide deployment of the devices for various applications. The integration of A-loT devices into 5G and future technologies poses a demanding problem that is addressed in the present disclosure.

Importantly, it is noted that the present disclosure is not limited to A-loT devices, but may also be applicable to any other loT devices (e.g. other types, such as Critical loT, Massive loT, Broadband loT, Narrow-Band loT etc.) or even more generally to other devices that benefit from the improvements of the present disclosure. For example, the terms loT device and A-loT device are used interchangeably in this disclosure; alternatively, the terms low-power-consumption device or low-complexity transceiver device could be used instead as well.

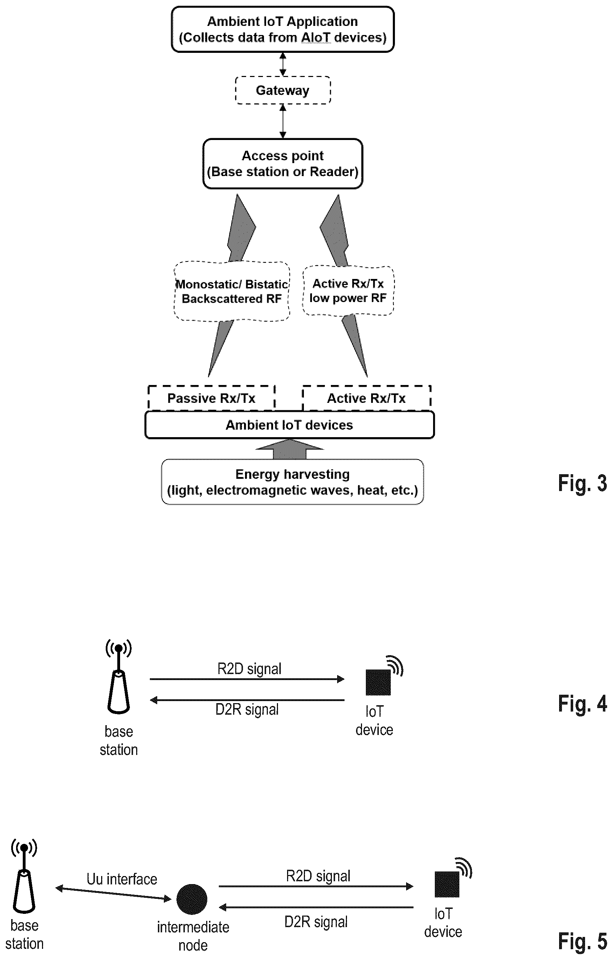

**Fig. 3** is an overview of an A-loT system, including the Ambient loT devices, an access point, an optional gateway and including the A-loT applications). As apparent from Fig. 3 the A-loT devices may harvest energy from their environment, i.e. their ambient. The A-loT devices may be able to communicate using passive reception and transmission (e.g. passive Rx/Tx) by monostatic or bistatic backscattering or alternatively may have an active Rx/Tx (low power) RF. The A-loT devices may communicate via an access points (or a base station or reader) with A-loT applications that may collect data from the A-loT devices. A gateway may be optionally between the access point and the A-loT applications.

More details on use cases, deice constraints and performance requirements as well as KPIs (Key Performance Indicators) can be obtained from the document 3GPP TR 22.840 v19.0.0.

### A-loT Topologies

Two different topologies are exemplarily considered in this disclosure for the loT communication between the loT device and the network. However, the present disclosure applies to other topologies as well. In the following, a node communicating with an loT device, for example, receiving data from or transmitting data to the loT device, may be also referred to as a reader. The reader can be e.g. a base station, or a UE etc.

In a first topology as illustrated in **Fig. 4****,** an loT device directly and bidirectionally communicates with a reader (such as a base station) over a wireless channel. The communication may include transmitting and/or receiving signals that may carry data information or control information. The data information may include e.g. user data, such as measurements performed by the loT device. The control information can be signaling information or signals such as control signals, reference signals or the like. In a further variant, not explicitly illustrated in Fig. 4, the direct communication with the base station may further include communication via one or more distributed units, DU, of the base station. A base station may operate one or more cells.

In a second topology as illustrated in **Fig. 5****,** an loT device bidirectionally communicates with an intermediate node that is located between the loT device and the reader (again e.g. a base station). The intermediate node could be for instance a User Equipment, an Integrated Access and Backhaul (IAB) node, a relay, a Network-Controlled Repeater (NCR) or any other suitable entity that supports loT. The intermediate node is connected to both the base station and the loT device and transfers the communication between the loT device and the base station. The base station may communicate with the intermediate node via a first interface, exemplified in Fig. 5 as the Uu interface (e.g. corresponds to UE - gNB interface in 5G NR). The intermediate node may communicate with the loT device via a second interface. The present disclosure is not limited to any specific interface definition. In general, the first and second interfaces in Fig. 5 may e.g. be both wireless interfaces.

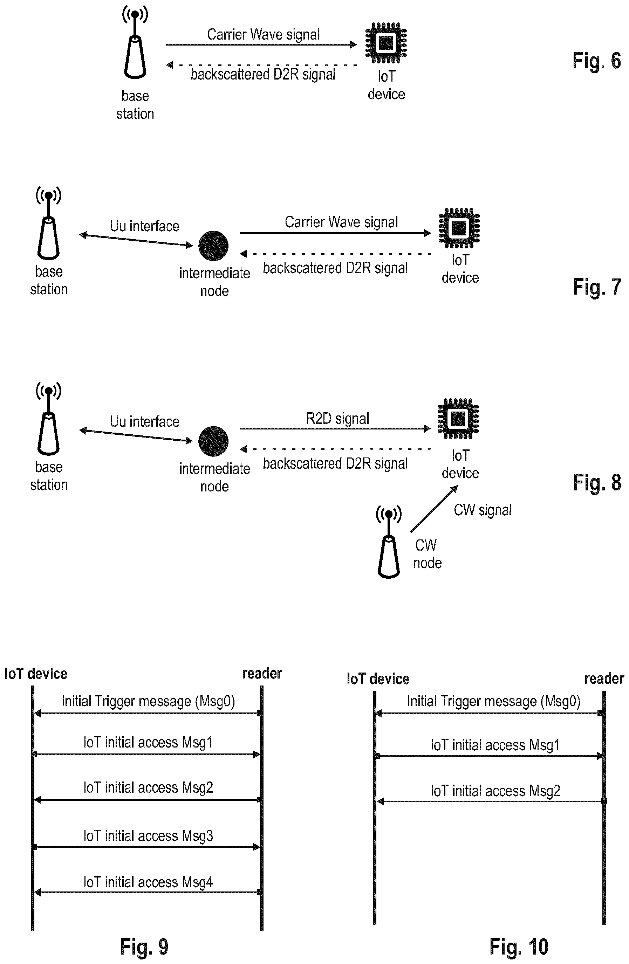

**Fig. 6** illustrates an exemplary implementation of a D2R transmission in the first topology of Fig. 4, where the base station functions as the reader and generates the Carrier Wave, CW, signal for the loT device. The base station transmits the CW signal to the loT device, and the loT device may backscatter and modulate the CW signal to generate the backscattered signal as the D2R signal.

Correspondingly, **Fig. 7** illustrates an exemplary implementation of a D2R transmission in the second topology of Fig. 5, where the intermediate node (e.g. a UE) functions as a reader and generates the CW signal for the loT device. The intermediate node transmits the CW signal to the loT device, and the loT device may backscatter and modulate the CW signal to generate the backscattered signal as the D2R signal.

**Fig. 8** illustrates an exemplary implementation of D2R and R2D transmissions in the second topology of Fig. 5, where an intermediate node (e.g. a UE) functions as a reader. To generate the R2D signal, the intermediate node generates the carrier wave signal, which is then modulated by the intermediate node to generate the R2D signal. The CW signal is generated by a CW node, which is arranged separately from the intermediate node, and is transmitted to the loT device. The loT device backscatters the CW signal to generate the backscattered signal as the D2R signal, which is transmitted to the UE.

### IoT Communication

Communication by IoT devices covers both active transmission as well as passive backscattering (see Fig. 3). In particular, backscattering devices do not necessarily have an active transmission component but are able to modulate information on the signal (e.g. carrier wave mentioned above) received from another node (e.g. CW node, such as a UE, a WiFi node, or access point). Active transmission allows higher range and better quality of service (QoS), compared to backscattering devices.

Energy-efficient communication is one key aspect for Ambient loT devices. In said respect, an On-Off-Keying (OOK) line coding scheme can be used as a modulation technique for loT communication in 3GPP 5G and future (e.g. 6G) communication systems, due to its simplicity and energy efficiency.

Ambient loT devices may support different types of services, such as "inventory" and "command". For either of the service request types, a baseline communication procedure may be exemplarily assumed, where in a first step (step A) an initial access trigger is sent to the device, followed by a random-access-like procedure. The reader may transmit an Initial Trigger Message indicating one or multiple loT devices that should respond. In response, the triggered loT devices may perform a random-access-like procedure and data communication.

Correspondingly, the Initial Trigger message may comprise suitable identification of a single loT device or a group of loT devices. Furthermore, in another example, the Initial Trigger message may not comprise any identification, in which case any and all IoT devices that receive the Initial Trigger message could respond.

No agreements have been reached regarding an ID for an IoT device, including the exact format so as to uniquely identify an IoT device (at least in the 3GPP system). It can be expected that a larger number of loT devices will be operational within a network (or serviced by an access point). The loT device ID might have a large size in order to facilitate an unambiguous identification within the whole network.

Details on the initial access (also called random access) for IoT communication have been discussed already as well. The initial access procedure of IoT devices can be achieved either in four steps (4-step random access procedure) or in two steps (2-step random access procedure).

In either case, Msg1 would be the first message from the loT device, in response to the initial trigger message (Msg0).

One example implementation of the initial access procedure may involve the following steps.

An exemplary 4-step IoT initial access procedure is illustrated in **Fig. 9****.** Alternatively, the 4-step loT initial access procedure can be termed normal loT initial access procedure. In response to the initial trigger message (Msg0), the loT device may transmit a Msg1 to the reader, which may include a random ID that is generated by the IoT device (e.g. it may be generated randomly or generated based on the IoT device ID).

The reader may transmit a Msg2 back to the IoT device, echoing the ID (e.g. random ID) received in Msg1 (e.g. including the same received ID in Msg2). The Msg2 may optionally include further information, such as information on the occasion (e.g. time and/or frequency) for the IoT device to transmit Msg3.

The loT device may transmit a Msg3 to the reader, including e.g. a Device ID of the IoT device and/or any other upper-layer data (depending on the upper-layer request). The loT device considers the contention resolution as successful, if the Msg2 is received including the same random ID as in Msg1.

A Msg4 can but need not always be sent by the reader to the loT device. The Msg4 can be considered to handle the Msg3 transmission failure (which may occur for various reasons).

An exemplary 2-step loT initial access procedure is illustrated in **Fig. 10****.** Alternatively, the 2-step loT initial access procedure can be termed shortened loT initial access procedure, considering that it is shorted compared to the above normal loT initial access procedure. In response to the initial trigger message (Msg0), the loT device may transmit a Msg1 to the reader, which may include a Device ID of the loT device and/or any other upper-layer data (depending on the upper-layer request). Optionally, an additional random ID can be included in the Msg1.

The reader may transmit a Msg2 back to the loT device, echoing some information from Msg1, such as the Device ID (or random ID) received in Msg1.

### Further improvements

As apparent from above, 3GPP intends implementing an loT communication procedure, according to which a plurality of loT devices can be simultaneously triggered (e.g. by a reader) to initially access the channel to transmit data to the reader. Consequently, in response to a suitable Initial Trigger message, a plurality of loT devices will try to access the same channel to the reader. This may be lead to interference and contention between the various loT devices, which either delays or prevents loT devices from successfully accessing the channel.

The inventors thus have identified the possibility to define an improved loT communication procedure and parts thereof, which facilitate meeting the above needs and avoiding one or more of the above described disadvantages. The present invention relates to different solutions and variants for such an improved loT communication procedure, particularly to an improved loT communication procedure for an initially access of the loT device.

### Solutions

In the following solutions, loT devices, nodes, integrated circuits and respective methods are provided for the improved loT initial access procedure to facilitate meeting the above needs. The present disclosure addresses the integration of loT devices into communication networks, particularly, according to 5G communication systems or future (e.g. 6G) communication systems. In particular, while 3GPP is currently developing Rel. 18 and 19 of the 5G (-Advanced) mobile communication system, 3GPP has already started planning for the next generation, 6G, of communications systems.

Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The term "**IoT device"** covers any loT devices (such as Ambient loT, Critical loT, Massive loT, etc.) but also other devices with possibly power or processing limitations. Correspondingly, the present disclosure is not limited to A-loT devices mentioned above, but may also be applicable to any other loT devices (e.g. other types, such as Critical loT, Massive loT, Broadband loT, Narrow-Band loT etc.) or even more generally to other devices that benefit from the improvements of the present disclosure. For example, the terms loT device and A-loT device are used interchangeably in this disclosure; alternatively, the term low-power-consumption device or low-complexity transceiver device could be used instead as well. Examples for A-loT devices include - without any limitation - wearables, smart home devices, automotive devices, sensors, smart keys, healthcare devices, etc.

The term **"reader"** refers to an entity communicating with an A-loT device and, for example, receiving information from or transmitting information to the A-loT device; it may be also referred to as a "node". The "node/reader" can be e.g. a base station, or a UE or an intermediate node etc.

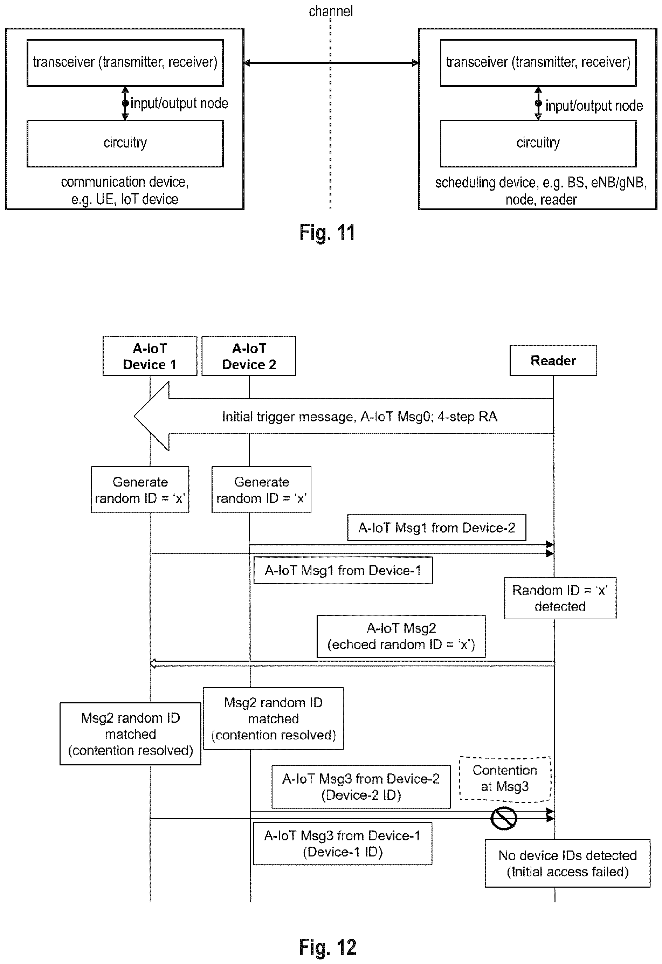

**Fig. 11** illustrates a general, simplified and exemplary block diagram of an loT device (as an example of a communication device) and a node (as an example of a scheduling device, could be also a base station, intermediate node connected to a base station or CW node) forming a communication system. In the following, it is exemplarily assumed that the node is a base station functioning as a scheduling device like an eNB or gNB (network node).

The communication device may comprise a transceiver and circuitry. The transceiver in turn may comprise and/or function as a receiver and a transmitter. The circuitry (e.g. processing circuitry) may be one or more pieces of hardware such as one or more processors or any LSIs. Between the transceiver and the circuitry there is an input/output point (or node) over which the circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The term "transceiver" is used for hardware and/or software components that allow the communication device, and the scheduling device to transmit and/or receive radio signals over the (wireless) channel, for example, a physical wireless channel. The transceiver, functioning as a transmitter, may be responsible for performing the process of transmitting and other processes related thereto. The transceiver, functioning as a receiver, may be responsible for performing the process of receiving and other processes related thereto, such as monitoring a channel. The transceiver may perform processes and operations, such as transmitting and/or receiving signals, as described with respect to the solutions of this disclosure.

The circuitry may implement control tasks such as controlling the transceiver to transmit user data and control data provided by the processing circuitry and/or receive user data and control data, which is further processed by the processing circuitry. The circuitry may also be responsible for performing other processes such as determining, deciding, calculating, measuring, etc. Moreover, the term "circuitry" can also be exemplarily implemented by processing circuitry formed by one or more processors or processing units, etc. The circuitry may perform any processes and operations, such as determinations, as described with respect to the solutions of this disclosure.

The loT device and the base station (eNB/gNB) are communicating with each other over a (wireless) physical channel, respectively, using their transceivers. The base station and the loT device are capable of transmitting as well as receiving radio signals via the channel. Together, the base station and the loT device form a communication, for example, a 5G or future communication system. The communication system may further include other entities such as further base stations, intermediate nodes and/or loT devices. Any of the solutions may be implemented in the loT device, the base station and/or communication system where appropriate.

Moreover, it is noted that the loT device as described in any of the solutions of this disclosure may be integrated on or as an integrated circuit (IC). Moreover, the integration does not necessarily include the entire transceiver. The transceiver is, in general, not necessarily a part of the loT device or the integrated circuit. The loT device may be connected to an external antenna (module) connected to the loT device over a port on the loT device. Similar structure applies to the node, which can also be integrated on or as an integrated circuit (IC).

Moreover, a computer program is provided including code instructions storable on a non-transitory medium, which when executed on one or more processors, causes the one or more processors to execute a method according to any of the solutions of this disclosure.

An exemplary implementation of one solution is explained below with reference to **Fig. 12****.** A four-step initial access procedure is assumed here. In more detail, an Initial trigger message may trigger a plurality of loT devices (e.g. multiple or all devices), e.g. by including a plurality of Device IDs, or a group ID or by not including an ID at all. Those loT devices that receive such a trigger would respond with Msg1 to perform initial/random access. Correspondingly, the triggered loT Devices 1 and 2 generate a random ID and send the generated random ID as part of an loT Msg1 to the reader. When the random ID is generated by each of the triggered loT devices, it is expected that the random ID from each of the devices are not same but different.

In case two loT devices generate respectively the same random ID value (e.g., random ID = x) for the loT Msg1 transmission, contention (i.e., collision of messages) occurs between those loT devices which are transmitting Msg1 (e.g. on the same D2R transmission occasion for transmitting loT Msg1).

The reader may estimate the Msg1-transmission collision (on one D2R occasion), but it certainly cannot trigger Msg2 for each device independently.

Msg2 with echoed random ID is transmitted from the reader. From the loT device perspective, the loT device receives Msg2 with the random ID being the same as initially sent via Msg1, such that this would seem to resolve the contention for all the loT devices which had transmitted the same random ID in Msg1.

However, the loT devices would transmit the loT Msg3 with different device ID values. The various Msg3 from the multiple loT devices may collide and may not be detectable at the reader, resulting initial access failure for one or more of the multiple loT devices.

According to the present solution, the size of the random ID values is increased (substantially) so as to facilitate a unique random ID value and thus to avoid contention regarding Msg1 of an loT initial access procedure. Correspondingly, it would become very unlikely that two loT devices generate the same random ID value (such as the assumed random ID = x) in Fig. 12.

For example, if the random ID value is increased to 8bits, the probability of collision during Msg1 is reduced to 1/(2^8). Even more bits could be used to reduce collision probability among large number of devices (for example, 16bits for applications using many hundreds to thousands of devices).

However, increasing the random ID size may not fully eliminate the possibility of collisions during practical operations. The solution presented in connection with Fig. 12 also fails to include a mechanism to handle contention, even if it would occur very seldom.

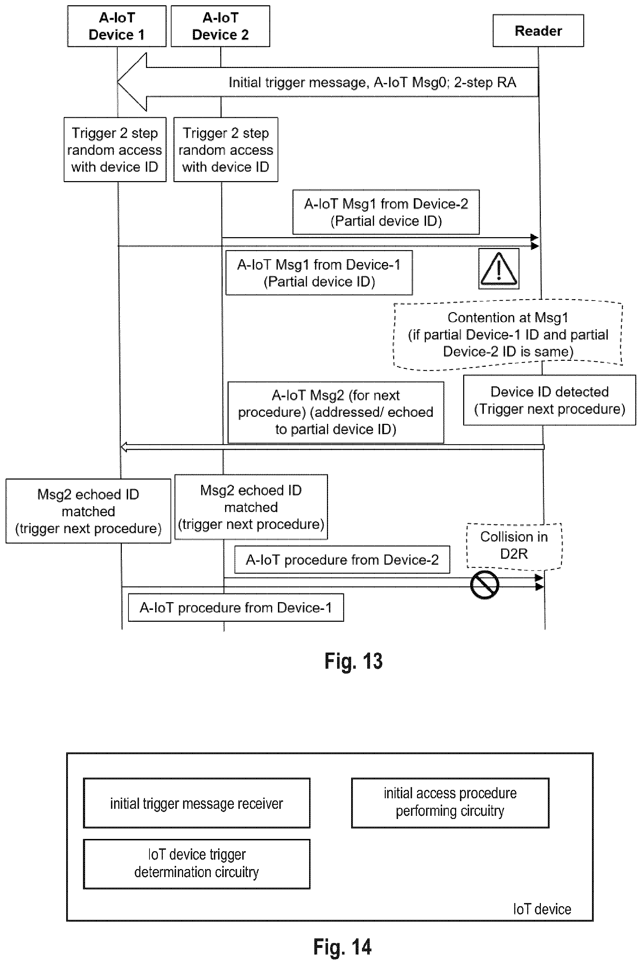

An exemplary implementation of another solution is explained below with reference to Fig. 13. A two-step initial access procedure is assumed here. As explained already above in connection with the 4-step initial access, an Initial trigger message may trigger a plurality of loT devices (e.g. multiple or all devices), e.g. by including a plurality of Device IDs, or a group ID or by not including an ID at all. Correspondingly, the triggered loT Devices 1 and 2 could transmit the loT Msg1 to the reader, including the device identification (Device ID).

The device ID assigned to each device (can be expected to be unique among all devices within the system) may possess a large size, which may impact the Msg1 transmission performance and resource overhead when the same is convey on the air interface. Sending device ID at this stage also poses a high risk of unauthorized tracking (or hacking).

According to the present solution, the loT devices instead could transmit a partial device ID on Msg1, which facilitates saving bandwidth during the access procedure and concealing full identity of the loT device. In one example, the partial device ID could be derived from the whole device ID as assigned to the loT device, e.g. the number bits to use (or a method to derive partial device ID) could be specified to the device.

However, the partial device ID value used by multiple devices may not be a unique value anymore. Several different device IDs could result into same value, which may again result in a contention during Msg1 reception.

For example, when the device ID is 16 bits, the partial device ID could be derived as the LSB 6bits on Msg1. In this case, although the 16bit value of each loT device is unique, the LSB 6bits value might not be unique among the loT devices (particularly when the total number of operational loT devices is more than 64). The solution presented in connection with Fig. 13 fails to include a mechanism to handle contention.

In the following, different solutions are presented, which further facilitate overcoming some of the above problems and facilitate achieving advantages. In brief, the First Solution implements a grouping mechanism for triggering loT devices. The Second Solution provides multiple transmit occasions and a selection rule usable for transmitting messages of the initial access procedure. The Third Solution provides a failure handling mechanism for the initial access procedure. The Fourth Solution provides a combination of two or more of the First, Second and Third Solutions.

### First Solution

According to the First Solution, a grouping mechanism is used for triggering loT devices for transmission, thereby facilitating a diversification of the number of loT devices that will be triggered.

**Fig. 14** illustrates a simplified and exemplary loT device structure according to a basic implementation of the improved loT initial access procedure presented in more detail below. In one example, the loT device structure can be implemented based on the general communication device structure explained in connection with Fig. 11. The various structural elements of the loT device illustrated in said Fig. 14 can be interconnected between one another e.g., with corresponding input/output nodes (not shown) e.g., in order to exchange control and user data and other signals. Although not shown for illustration purposes, the loT device may include further structural elements.

As apparent from Fig. 14, the loT device may include an initial trigger message receiver, an loT device trigger determination circuitry, and an initial access procedure performing circuitry.

The above initial trigger message receiver can exemplarily be implemented based on the transceiver of the general communication device structure of Fig. 11, which however can also perform further functions as will become apparent from below. The above loT device trigger determination circuitry and initial access procedure performing circuitry can exemplarily be implemented based on the circuitry of the general communication device structure of Fig. 11, which however can also perform further functions as will become apparent from below.

One exemplary procedure is implemented by an loT device that includes the following. A transceiver of the loT device receives an initial trigger message from a reader, indicating a group of loT devices to be triggered for transmission. Circuitry of the loT device determines whether the loT device is triggered by the initial trigger message, based on the indicated group of loT devices and one or more groups to which the loT device is assigned. In case the circuitry determines that the loT device is triggered by the initial trigger message, the loT device performs an initial access procedure with the reader.

A corresponding exemplary method comprises the following steps performed by an loT device:
receiving an initial trigger message from a reader, indicating a group of loT devices to be triggered for transmission;
determining whether the loT device is triggered by the initial trigger message, based on the indicated group of loT devices and one or more groups to which the loT device is assigned,
in case the circuitry determines that the loT device is triggered by the initial trigger message, performing by the loT device an initial access procedure with the reader.

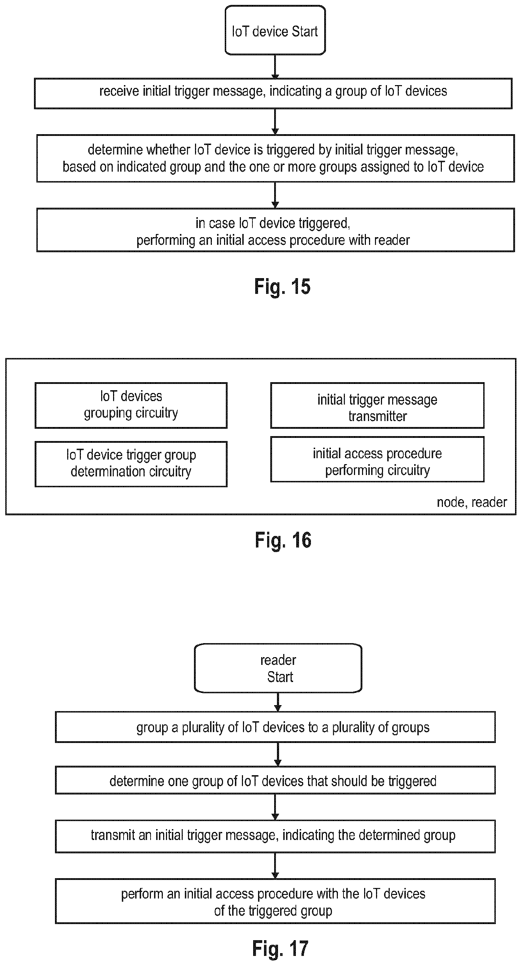

A corresponding sequence diagram for an exemplary loT device behaviour in line with the above-discussed loT device and loT device method is presented in **Fig. 15****.**

The above-described improved loT initial access procedure at the loT device facilitates achieving the objective and overcoming at least some of the drawbacks explained above. In particular, it facilitates reducing the contention between the loT devices that are triggered by the reader. The grouping facilitates that a smaller number of loT devices is triggered at the same time, such that the available number of IDs to be used for the initial access procedure is sufficient to allow for the loT devices to select a unique ID with greater probability.

**Fig. 16** illustrates a simplified and exemplary reader structure according to an exemplary implementation of the improved loT initial access procedure presented in more detail below. In one example, the reader can be implemented based on the general reader structure explained in connection with Fig. 11. The various structural elements of the reader illustrated in said Fig. 16 can be interconnected between one another e.g., with corresponding input/output nodes (not shown) e.g., in order to exchange control and user data and other signals. Although not shown for illustration purposes, the reader may include further structural elements.

As apparent from Fig. 16 the reader may include an loT devices grouping circuitry, an loT device trigger group determination circuitry, an initial trigger message transmitter and an initial access procedure performing circuitry.

The above initial trigger message transmitter can exemplarily be implemented based on the transceiver of the general communication device structure of Fig. 11, which however can also perform further functions as will become apparent from below. The above loT devices grouping circuitry, loT device trigger group determination circuitry, and initial access procedure performing circuitry can exemplarily be implemented based on the circuitry of the general communication device structure of Fig. 11, which however can also perform further functions as will become apparent from below.

One exemplary procedure is implemented by a reader that includes the following. Circuitry of the reader groups a plurality of loT devices to a plurality of groups of loT devices. The circuitry determines one group of loT devices that should be triggered for transmission. A transceiver of the reader transmits an initial trigger message, indicating the determined one group of loT devices. The circuitry performs an initial access procedure with loT devices of the triggered group of loT devices.

A corresponding exemplary method comprises the following steps performed by a reader:
grouping a plurality of loT devices to a plurality of groups of loT devices,
determining one group of loT devices that should be triggered for transmission,
transmitting an initial trigger message, indicating the determined one group of loT devices,
performing an initial access procedure with loT devices of the triggered group of loT devices.

A corresponding sequence diagram for an exemplary reader behaviour in line with the above-discussed reader and reader method is presented in **Fig. 17****.**

The above-described improved loT initial access procedure at the reader facilitates achieving the objective and overcoming at least some of the drawbacks explained above. In particular, it facilitates reducing the contention between the loT devices that are triggered by the reader.

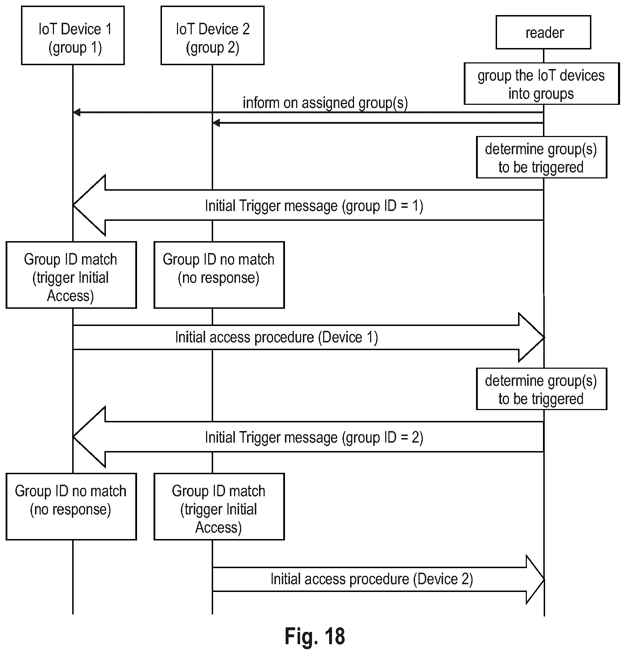

**Fig. 18** is a signaling diagram of an exemplary and simplified implementation of the improved loT initial access procedure, illustrating the exchange of messages between the different participating entities (here the loT device and reader) and steps performed at these entities. The loT device behaviour and reader behaviour follow the above described loT device and reader as well as the respective methods.

As apparent from Fig. 18, the reader is exemplarily assumed to be responsible for grouping the loT devices into groups and to then inform the loT devices on the assigned one or more groups. After the grouping is completed, the reader can proceed to perform the group-based triggering of the loT devices and determines one or more groups of loT devices to be triggered. In the example of Fig. 18, it is assumed that the reader determines to trigger the loT devices of group 1 for transmission. Correspondingly, the reader transmits an initial trigger message indicating group 1, here using a group ID = 1.

loT device 1, belonging to group 1, determines that it is triggered (group ID matches) and correspondingly performs an initial access procedure with the reader. On the other hand, loT device 2, belonging to another group 2, determines that it is not triggered (group ID does not match) and does not respond to the initial trigger message.

Furthermore, the reader may proceed to trigger loT devices of another group, here e.g. of group 2 for transmission at a later point in time. The decision of the reader to trigger another group 2 may occur after having decided to trigger group 1, and possibly also even after the initial access procedure with some or all of the loT devices of group 1 is complete. Alternatively, the subsequent decision of the reader to trigger the loT devices of group 2 may already have occurred together with the decision to trigger group 1, but the triggering is postponed such that the group-based triggering is performed one group at a time.

In any case, similarly as presented for group 1, the reader transmits an initial trigger message indicating group 2, here using a group ID = 2. loT device 2, belonging to group 2, determines that it is triggered (group ID matches) and correspondingly performs an initial access procedure with the reader. On the other hand, loT device 1, belonging to the other group 1, determines that it is not triggered (group ID does not match) and does not respond to the initial trigger message.

As apparent from Fig. 18, the groups are triggered separately one at a time. Although the example in Fig. 18 illustrates that group 2 is triggered after the initial access procedure of loT device 1 of group 1 is completed, the First Solution is not limited thereby. Rather, the First Solution provides a group-based triggering, according to which the transmissions of initial trigger messages, indicating different group IDs, are timely separated, for instance separate in time by a certain time offset. For instance, the next group triggering may occur after the initial access procedure with loT devices of the preceding triggered group of loT devices has started (e.g. after the Msg1 from an loT device has been received at the reader, or after the Msg2 has been transmitted by the reader to the loT devices, or after the Msg3 from an loT device has been received at the reader). It is however not necessary that previously-triggered loT devices of one group complete their initial access procedure first, before the reader proceeds to trigger loT devices of another group.

The different processes at the loT device and reader side have been explained with respect to above Fig. 14-18. More detailed and exemplary implementations of these processes of the improved loT initial access procedure will be explained in the following.

According to the solution presented in connection with Fig. 18, the initial access procedure is performed by the loT devices with the reader. There are at least two types of initial access procedures that can be performed by the loT devices when triggered by the reader for transmission. Two types have been already explained above in connection with Fig. 9 and 10, respectively, namely the normal (or 4-step or 3-step) initial access procedure and the shortened (or 2-step) initial access procedure. In example implementations, these two types can be used conceptually also for the improved loT initial access procedure of the First Solution. Details on the two types and variants thereof are explained above and are equally applicable for the First Solution.

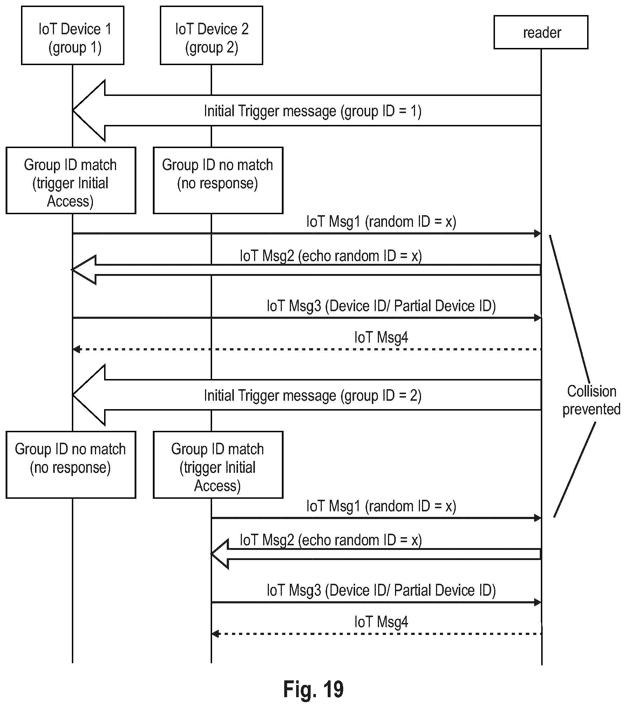

**Fig. 19** illustrates a signaling diagram of an exemplary and simplified implementation of the improved loT initial access procedure, based on a normal (e.g. 4-step) loT initial access procedure. The solution as presented in Fig. 19 is quite similar to the one of Fig. 18, but provides details as to the messages that can be exchanged between the loT devices and the reader during the normal initial access procedure.

As apparent from Fig. 19, during the normal initial access procedure, the loT device 1 may transmit a first message loT Msg1 to the reader, wherein the first message may include a random ID (here assumed random ID = x). In one example, the random ID is generated randomly by the loT device or can be generated by the loT device from its Device ID.

In response, the reader returns a second message loT Msg2 to the loT device 1, wherein the loT Msg2 may include the random ID received by the reader in the first message. Receiving loT Msg2 addressed to the same random ID = X would be considered by the loT device 1 as resolving already a possible contention. In case the loT Msg2 would contain another ID than the random ID transmitted by loT device 1 in loT Msg1, the loT device would consider that this loT Msg2 is not addressed to it and that contention is not resolved. In a further exemplary implementation, the loT Msg2 may include further information, such as information on the D2R occasion (time and/or frequency) usable by the loT device 1 to transmit the subsequent loT Msg3.

The loT Device 1, in response to receiving the loT Msg2 (with random ID = x), transmits a third message loT Msg3 to the reader, wherein the third message contains an identification of the loT device, such as a (full) device ID. In a further exemplary implementation, the loT Msg3 may contain any upper-layer data to be transmitted to the reader (may depend on the upper-layer request and loT application).

As a further option, instead of transmitting a full Device ID, the loT device could transmit a partial device ID in loT Msg3, which facilitates saving bandwidth during the initial access procedure and concealing the full identity of the loT device 1. The Partial Device ID was already explained above in connection Fig. 13, according to a solution for a two-step initial access procedure. The Partial Device ID could be derived from the whole Device ID as assigned to the loT device, e.g. the number bits to use (or a method to derive Partial Device ID) could be specified to the loT device. One example, explained above already, is that the Partial Device ID could be the LSB 6bits of the full Device ID.

As further apparent from Fig. 19, a fourth message of the initial access procedure, loT Msg4, can but need not always be sent by the reader to the loT device. In one example, the loT Msg4 can be considered to have the purpose of handling an loT Msg3 transmission failure (which may occur for various reasons). The optional character of the fourth message is illustrated in Fig. 19 with a dashed arrow.

As apparent from Fig 19, a similar initial access procedure is performed between loT device 2 belonging to group 2 and the reader, in response to a corresponding initial trigger message indicating group ID = 2.

Even in case loT Devices 1 and 2 select the same random ID (X in Fig. 19), the likelihood of a possible collision and interference between various loT Msg1 transmissions from the loT devices of different groups is reduced, because the loT devices of different groups are triggered at different times (i.e. not simultaneously).

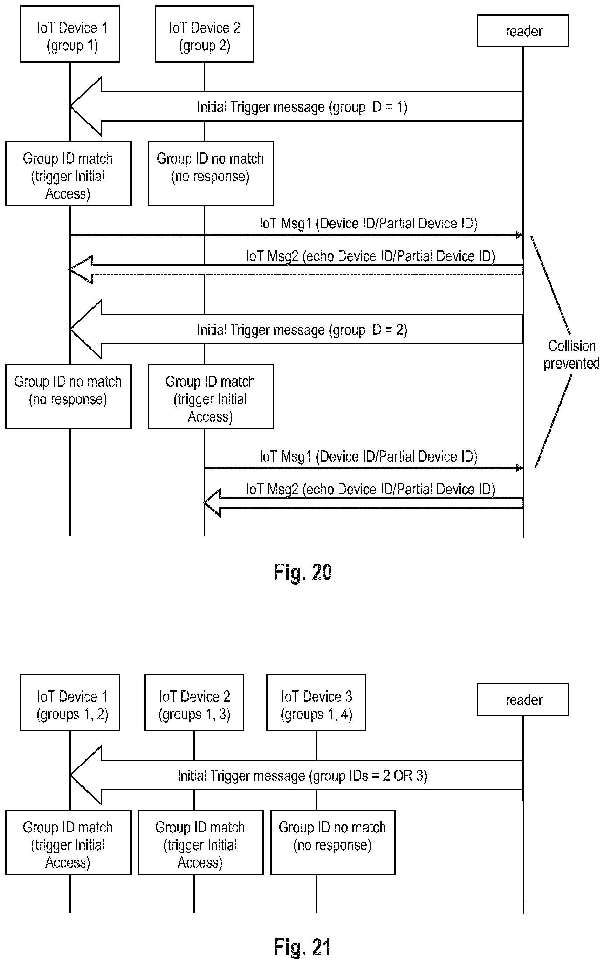

**Fig. 20** illustrates a signaling diagram of an exemplary and simplified implementation of the improved loT initial access procedure, based on a shortened (e.g. 2-step) loT initial access procedure. The solution as presented in Fig. 20 is quite similar to the one of Fig. 18, but provides details as to the messages that can be exchanged between the loT devices and the reader during the shortened initial access procedure.

As apparent from Fig. 20, during the shortened initial access procedure, the loT device 1 may transmit a first message loT Msg1 to the reader, wherein the first message may include an identification of the loT device, such as a (full) device ID. In a further exemplary implementation, the loT Msg1 may contain any upper-layer data to be transmitted to the reader (may depend on the upper-layer request and loT application). In one optional exemplary implementation, a random ID can be also included by the loT device in the loT Msg1.

As a further option, instead of transmitting a full Device ID, the loT device could transmit a partial device ID in loT Msg1, which facilitates saving bandwidth during the initial access procedure and concealing the full identity of the loT Device 1. Further details on the partial device ID are available from above, in connection with Fig. 19 (and Fig. 13).

The reader may transmit an loT Msg2 back to the loT device 1, echoing some information from loT Msg1, such as the Device ID (or random ID) received in loT Msg1.

As apparent from Fig 20, a similar initial access procedure is performed between loT device 2 belonging to group 2 and the reader, in response to a corresponding initial trigger message indicating group ID = 2.

Even in case loT Devices 1 and 2 have and indicate the same Partial Device ID, the likelihood of a possible collision and interference between various loT Msg1 transmissions from the loT devices of different groups is reduced, because the loT devices of different groups are triggered at different times (i.e. not simultaneously).

According to one example, in both the normal and shortened initial access procedures, the loT devices consider that a possible contention of loT Msg1 with other loT Msg1s of other loT devices is resolved in case the received second message loT Msg2 includes the ID of the first message (e.g. random ID for the normal initial access procedure, or (Partial) Device ID for the shortened initial access procedure).

Whether the loT devices perform the normal or shortened initial access procedure can be controlled in different ways. According to one example implementation, the initial trigger message provides the indication which type of initial access procedure is to be performed, thereby allowing a dynamic configuration and great flexibility. According to another implementation, the type of initial access procedure to be performed can be configured for each loT device in advance, e.g. by the reader during registration of the loT device, or by a service provider or by a manufacturer. As another option, the type of initial access procedure may also depend on the capability of the loT device and/or the reader.

In the following, more information will be provided on exemplary implementations of the grouping of the loT devices into groups.

According to one exemplary implementation of the First Solution, the reader is responsible for grouping a plurality of loT devices into a plurality of groups. The First solution is however not limited in said respect, and instead or additionally to the grouping by the reader, a service provider and/or manufacturer may also perform a grouping of the loT devices into groups.

Correspondingly, the grouping could be performed in advance e.g., by the service provider or manufacturer, or at a later point of time by the reader, e.g. during or after the registration procedure of the loT device with the reader. A later grouping has the advantage that the groups can be dynamically adapted during operation.

In one exemplary variant, the grouping (e.g. by the reader) can be based on different categories of the loT devices, which could also be relevant for the loT application. For example, the grouping can be based on one or more of
- a type of the loT devices: e.g. "Type 1", "Type 2a", Type 2b", Type 3", etc.
- cryptographic capabilities of the loT devices, e.g. "no authentication", "require authentication", etc.
- cryptographic algorithm capabilities of the loT devices: e.g. "supported algorithm X", "supported algorithm Y", etc.
- operator registered for the loT devices, e.g. "local operator", "roaming", "operator X", "operation Y", etc.
- a usage type of the loT devices, particularly a generic one, such as "inventory", "command".
- an application-specific usage type of the loT devices: e.g. "inventory of medicine", "inventory of expensive equipment", "inventory of staff equipment" etc.
- an identification of the loT devices: device ID, part of device ID,
- a supervisory node of the loT devices: "reader", "gNB", "core network", "third party node"
- an assignment format of a device ID of loT devices: e.g. "operator assigned format", or "Electronic Product Code (EPC) standard", or "3GPP standard" etc.

The above mentioned usage type "inventory" can be exemplarily understood as an identification operation, which may involve to read the device identification information stored in the loT device.

The above mentioned usage type "command" can be exemplarily understood as where the loT devices do certain actions (other than simple identification) when triggered by a command message. For instance, the loT device could measure and report its position (or sample sensor related data). Alternatively, a command message can be used to modify or to do write operation of information that is stored in the memory of the loT device.

Furthermore, there are different possibilities for the grouping. In one example, the grouping is such that one loT device is assigned to only one group, e.g. there is a one-to-one association.

In another example, the grouping is such that one loT device can be assigned to more than one group. For instance, an loT device may belong to a "Type 1" device type group as well as to the "inventory of medicine" device-usage group. Similarly, an loT device may belong to a first group, which requires authentication and further may belong to another second group of "supporting algorithm X" (which can be considered a sub-group of the first group). Assigning an loT device to multiple groups may increase flexibility for the reader to trigger a larger number of loT devices or a smaller number of loT devices with one group, as needed. In one example, the reader may take into account a collision rate to be expected between the loT devices of the groups, when determining which group of loT devices should be triggered. The smaller the number of loT devices in a group, the less likely a collision might occur between triggered loT devices of the group.

When the loT devices are grouped based on the uniqueness of the partial device ID (e.g. the partial device ID will be used by the loT devices during the subsequent initial access procedure), the likelihood of collision and interference between the unique partial device IDs within the group is very low. In such a scenario, it is also possible to instruct the loT devices to perform a shortened initial access procedure to save time.

As still another example, the grouping is such that some loT devices can be assigned to only one group and other loT devices can be assigned to more than one groups. This allows to further increase flexibility of the grouping mechanism and consequently on how the loT devices can be triggered, which can be especially useful in case there is a large number of loT devices to be triggered.

Moreover, the different groups can be identified and differentiated based on respective group IDs. The group IDs can be assigned to the loT devices by the entity responsible for the grouping, such as the service provider, manufacturer or reader. The one or more group IDs assigned to an loT device can be stored in the loT device, in addition to the Device ID of the loT device. As mentioned before, the grouping could also be modified during operation.

There are different exemplary implementations on the format and values of the group ID. For instance, the group ID could be part of the Device ID of the loT device (see e.g. grouping based on the identification of the loT devices), but may also be independent of the Device ID. The group ID may have sufficient bits so as to uniquely identify the different groups.

In the following, more information will be provided on exemplary implementations of how the reader can determine which one or more groups of loT devices are selected for triggering.

In general, loT devices can be triggered for various reasons, e.g. depending on the loT application. As an example, the reader may want to trigger all loT devices under its control, so as to obtain relevant data (e.g. measurement data, etc.). As another example, the reader may want to trigger loT devices of one or more categories (see above for examples of categories). In any case, the reader may select the loT devices it intends to trigger and correspondingly may determine which groups of loT devices should be used for the triggering.

The triggering of the loT devices can be performed either one device at a time, e.g. using the corresponding Device ID of the loT device in the initial trigger message. Similarly, for a multi-device triggering, the reader can determine one group of loT devices that should be triggered for transmission. The initial trigger message may be generated to indicate the determined one group of loT devices, e.g. by including the corresponding group ID in the initial trigger message. As a result, only those loT devices belonging to the indicated group will be triggered for transmission, and e.g. may respectively initiate an initial access procedure with the reader for being able to transmit data (if available) to the reader.

Triggering one group of loT devices at a time may facilitate avoiding interference and contention among the multiple loT devices, because the number of loT devices triggered at the same time will be reduced. The smaller the number of loT devices in the triggered group, the higher the probability that the contention and interference can be reduced. Consequently, one criterion that can be taken into account (e.g. by the reader) during the grouping process is the number of loT devices in a single group.

According to another variant, the triggering of loT devices can be performed based on more than one group, e.g. by indicating more than one group in the initial trigger message. The multiple trigger groups can be combined in an "AND" or an "OR" relationship.

In particular, when the multiple groups are combined with the "AND" operator, the loT device is triggered by the initial trigger message, in case the loT device is associated with all of the at least two groups of loT devices indicated by the initial trigger message. Using the "AND" operator for the multi-group triggering facilitates a targeted triggering of loT devices by the reader, thereby facilitating to reduce the number of loT devices that are triggered at the same time, which may reduce the interference and contention among multiple loT devices.

Conversely, when the multiple groups are combined with the "OR" operator, the loT device is triggered by the initial trigger message, in case the loT device is associated with at least one of the at least two groups of loT devices indicated by the initial trigger message. Using the "OR" operator for the multi-group triggering facilitates triggering several groups at the same time. While this may potentially increase the contention and interference probability, this flexibility can still be desirable, for instance in connection with groups having only small number of loT devices.

Moreover, a combination of the "AND" and "OR" operators is equally possible for the multi-group triggering, wherein a combination of two trigger groups are linked by one operator type (e.g. "AND") and another combination of two trigger groups are linked by the other operator type (e.g. "OR").

**Fig. 21** illustrates a signaling diagram of the beginning of an improved loT initial access procedure, particularly regarding the multi-group-based triggering of loT devices using the initial trigger message, where the "OR" operator is used for triggering multiple groups with one initial trigger message. As apparent from Fig. 21, the initial trigger message may indicate group IDs "2 OR 3". Correspondingly, loT devices 1 and 2 are triggered by the initial trigger message, because they belong to at least one of the groups indicated by the initial trigger message. On the other hand, loT device 3 is not triggered because it is not assigned to any one of indicated groups 2 or 3. The multi-group triggering based on the "OR" operator allows the reader to specifically trigger loT devices 1 and 2 but not loT device 3. Otherwise, the reader could have performed the loT device triggering indicating only one group 1, in which case however more loT devices (i.e. also loT device 3) would have been triggered unnecessarily.

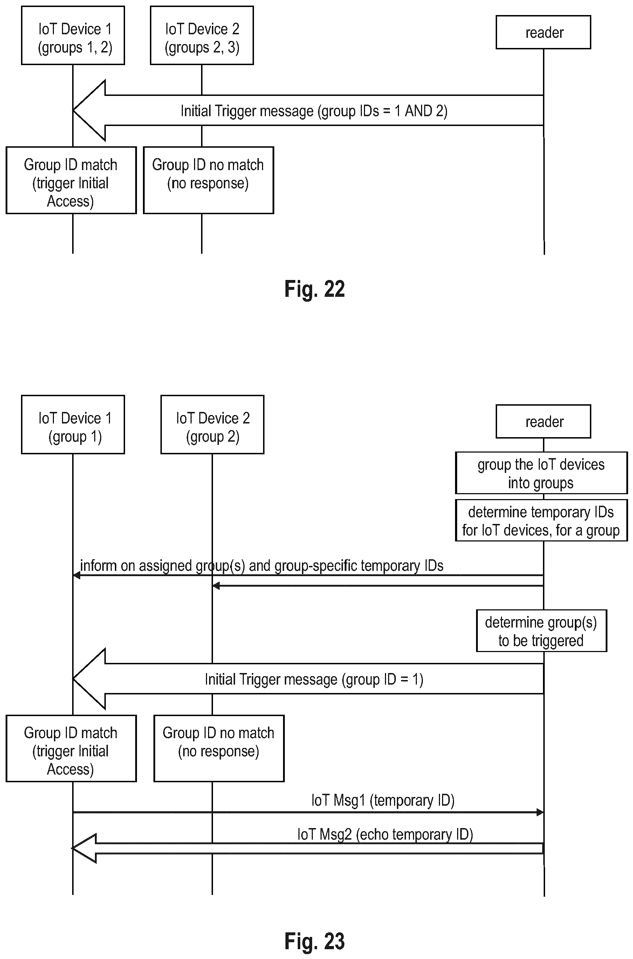

**Fig. 22** illustrates a signaling diagram of the beginning an improved loT initial access procedure, particularly regarding the multi-group-based triggering of loT devices using the initial trigger message, where the "AND" operator is used for triggering multiple groups with one initial trigger message. As apparent from Fig. 22, the initial trigger message may indicate group IDs "1 AND 2". Correspondingly, only loT device 1 is triggered by the initial trigger message, because it belongs to all of the groups indicated by the initial trigger message. On the other hand, loT device 2 is not triggered because it is not assigned to indicated group 1.

The above discussed implementations of a multi-group triggering using an "AND" or an "OR" relationship can be applied to the different types of initial trigger procedure, e.g. to the normal (e.g. 4-step) initial access procedure and to the shortened (e.g. 2-step) initial access procedure.

For the above multi-group triggering mechanism, both the reader and the loT devices have the same understanding of which operator ("AND" or "OR") should be applied between the multiple trigger groups. One example variant provides that the initial trigger message includes the necessary information on which operator is to be applied by the loT devices for linking the multiple trigger groups indicated by the initial trigger message. This allows for a flexible and dynamic loT initial access procedure, because whether and how multiple groups are triggered can be changed at each instance of transmitting the initial trigger message.

However, the First Solution is not limited in said respect, and instead of or in addition, a default operator (be it "AND" or "OR") could be configured in advance (e.g. by the service provider or manufacturer). Thus, including such operator information into the initial trigger message is not necessary, which reduces the overhead. Furthermore, even with a configured default operator, in case the initial trigger message indicates an operator to be used, the indicated operator overwrites the previously-configured default operator.

In summary, the reader will have selected one or more groups of loT devices to be triggered for transmission. The reader then generates a suitable initial trigger message and transmits same to the loT devices. As mentioned above, the initial trigger message may indicate the one or more groups of loT devices.

As presented above in connection with the First Solution, the loT devices identify themselves during the initial access procedure by respectively using their Device ID or their Partial Device ID, e.g. in Msg3 of the 4-step initial access procedure (see e.g. Fig. 19) or in Msg1 of the 2-step initial access procedure (see e.g. Fig. 20). This Device ID, however, may possess a large size in order to be unique among all loT devices within the system, which may negatively impact the Msg1/Msg3 transmission.

According to a further exemplary improvement usable in the First Solution (and also in the other Second, Third and Fourth Solutions), instead of using the Device ID (or the Partial Device ID) by the loT devices during the initial access procedure, a temporary ID is used during the initial access procedure to temporarily identify the loT device. This temporary ID can be shorter than the Device ID, because it has to be only unique within one or more groups that can be triggered by the reader or has to be only unique for a certain amount of time.

According to one example implementation, the reader can be responsible for controlling and assigning temporary IDs to the loT devices. Alternatively, a service provider or manufacturer can be responsible for controlling and assigning temporary IDs to the loT devices. Correspondingly, assignment information can be transmitted by the reader or service provider to the loT devices, so as to inform the loT devices on their assigned temporary ID. In another example, the manufacturer may store suitable assignment information on the temporary ID in each loT device.

According to one example implementation, the temporary ID is generated to be unique within one group or within more than one group of loT devices. Consequently, when the reader triggers said one or more groups of loT devices at the same time (e.g. using one initial trigger message), the loT devices will identify themselves during the initial access procedure based on the unique temporary ID, such that a contention between several loT devices using the same identification can be avoided.

For instance, instead of transmitting the device ID, the triggered loT devices transmit their respective previously-assigned temporary IDs in Msg3 (see 4-step initial access procedure) or in loT Msg1 (see 2-step initial access procedure). The reader can be aware of the association between the temporary ID and the (full) Device ID of the loT device, such that the reader can either echo the temporary ID or the Device ID back to the loT device in the loT Msg4 (see 4-step initial access procedure) or in loT Msg2 (see 2-step initial access procedure).

In those cases where an loT device is assigned to several groups of loT devices, the loT device may also have several different group-specific temporary IDs that can be used. Correspondingly, the loT device will determine the group-specific temporary ID that is associated with the trigger group from the initial trigger message.

Using the temporary ID instead of a Device ID during the initial access procedure may have the additional advantage that the identity of the loT devices can be concealed during the initial access.

In a further example implementation, in case an loT device is configured to use the temporary ID instead of the Device ID, the loT device might also derive therefrom that it is allowed to perform a shortened (e.g. 2-step) initial access procedure, so as to reduce the latency of the initial access.

**Fig. 23** is a signaling diagram according to a variant of the First Solution using a temporary ID instead of a Device ID during the improved loT initial access procedure. As apparent therefrom, it is assumed that the reader determines the temporary IDs for the loT devices for at least one previously determined group of loT devices. The temporary IDs are unique within the group of loT devices. Information on the determined temporary IDs is provided to the loT devices, e.g. together with information on the assigned groups to which the loT devices belong.

The reader determines a group of loT devices to be triggered, here e.g. the group with group ID =1. loT Device 1 determines that the indicated group ID matches with its own assigned group 1 and thus initiates an initial access procedure. Furthermore, the loT Device 1 determines that it has been assigned with a temporary ID for the triggered group and thus is allowed to initiate a shortened (e.g. 2-step) initial access procedure. During this shortened initial access procedure, the loT Device 1 transmits the first message loT Msg1 including the previously assigned temporary ID, instead of its Device ID (or a Partial Device ID). The reader receives the loT Msg1 and returns as the second message loT Msg2 the temporary ID received within the first loT Msg1. The temporary ID is smaller than the full Device ID and thus create less overhead for the R2D transmission of the loT Msg2.

As presented above in connection with the First Solution, several loT devices of the triggered group are triggered to transmit a message of the initial access procedure to the reader.

In one example, the timing for transmitting the first message of the initial access procedure from a triggered loT device may be related to the initial trigger message. For instance, the initial trigger message may include information indicating the D2R occasion (e.g. in time and optionally in frequency domain) usable by the triggered loT device(s) for transmitting the first message of the initial access procedure. Alternatively, a time offset can be configured in advance for use when transmitting the first message of the initial access procedure, the time offset being applicable with respect to the reception of the initial trigger message.

Due to the above, it is thus possible that a message of the initial access procedure (e.g. the first message) is transmitted by the various triggered loT devices at the same time to the reader. This simultaneous transmission at the same occasion may cause interference and contention at the reader side when attempting to receive the various messages of the different loT devices of the triggered group(s) simultaneously.

According to a further exemplary improvement usable in the First Solution (and also in the other Second, Third and Fourth Solutions), an loT device transmits an orthogonal sequence (mutually orthogonal with respect to other sequences) as a message of the initial access procedure (e.g. as the first message of the shortened or normal initial access procedure) to the reader. Due to the orthogonality of the sequences, the reader is able to properly detect and process simultaneously received messages from different loT devices, thereby avoiding interference and contention at the reader side.

As one example, Zadoff-Chu sequences can be used for the orthogonal sequences.

According to the following exemplary variant, several mutually orthogonal sequences are available, respectively associated with different IDs. As presented above, an ID is transmitted to the reader with the first message of the initial access procedure, e.g. a random ID in case of a normal (e.g. 4-step) initial access procedure, e.g. a device ID or partial device ID or temporary ID in case of a shortened (e.g. 2-step) initial access procedure.

Correspondingly, when the loT device is triggered for transmission, the loT device determines the ID to be transmitted to the reader as part of the initial access procedure (e.g. the random ID, full Device ID, Partial Device ID or temporary ID...) and then determines the corresponding orthogonal sequence that is associated with said ID. The loT device transmits the thus determined orthogonal sequence to the reader (instead of a message including the ID, as explained above). For example, for a 4-step initial access procedure, the loT device determines a random ID, determines an orthogonal sequence associated with the determined random ID, and transmits the thus determined orthogonal sequence as the first message loT Msg1 of the 4-step initial access procedure. Another example, for a 2-step initial access procedure, the loT device determines an identification of the loT device (e.g. a Partial device ID or temporary ID), determines an orthogonal sequence associated with the determined loT device ID, and transmits the thus determined orthogonal sequence as the first message Msg1 of the 2-step initial access procedure.

The reader, in turn, can determine the ID (be it the random ID, full device ID, partial device ID or temporary ID) from the received orthogonal sequence, based on the same association information used by the loT device to derive the orthogonal sequence from the ID. Thus, the reader is enabled to echo (e.g. send back) the corresponding ID in a subsequent message transmitted from the reader to the loT device as part of the initial access procedure, e.g. Msg2 of the 4-step or 2-step initial access procedure.

This orthogonal-sequence improvement is particularly useful when applied to cases with only a small number of IDs. As presented above, the IDs, selectable by the loT device for being transmitted to the reader as part of the initial access procedure, are to be associated with different orthogonal sequences, so as to allow for mutual orthogonality between all sequences and thus all IDs. The more IDs, the more orthogonal sequences are to be available, which increases the complexity of the loT devices and their design. Consequently, the orthogonal-sequence improvement may only be supported for IDs that are small enough.

For instance, a 16-bit ID may require 2^16 (=65536) different orthogonal sequences, which might require too much complexity at the loT device side. When having to transmit a 16-bit ID to the reader as part of the initial access procedure, the loT device might not support the orthogonal sequence improvement.

On the other hand, an 8-bit ID may require 2^8 (256) different orthogonal sequences, which might be reasonable to be processed by the loT device. Consequently, when having to transmit an 8-bit ID to the reader as part of the initial access procedure, the loT device might decide to transmit an orthogonal sequence to the reader.

Generally, in another example, whether or not the orthogonal sequence improvement can be used during the improved loT initial access procedure may depend on the capabilities on the loT device side and/or the reader side.

In summary, the orthogonal sequence improvement might be selectively used at the loT device side, e.g. depending on whether the ID size is small enough or whether the capability of the loT device / reader supports same.

In the above, the use of transmitting orthogonal sequences in a normal (e.g. 4-step) initial access procedure was described primarily for loT Msg1. On the other hand, the improvement is not limited in said respect, and the use of transmitting orthogonal sequences in a normal (e.g. 4-step) initial access procedure can also be applied to the transmission of loT Msg3 following the same concepts.

As a further exemplary improvement, the reader, when detecting the separate first messages loT Msg1 received simultaneously from various loT devices, transmits the response message (IoT Msg2) back to the loT devices at different timings, e.g. one at a time. Put differently, even when receiving the first message loT Msg1 from various loT devices simultaneously, the reader does not transmit the response message (IoT Msg2) back simultaneously but rather with time periods in between. This allows to further reduce the possibility of interference and contention for subsequent messages of the initial access procedure, because the loT devices receive the response messages loT Msg2 at different timings.

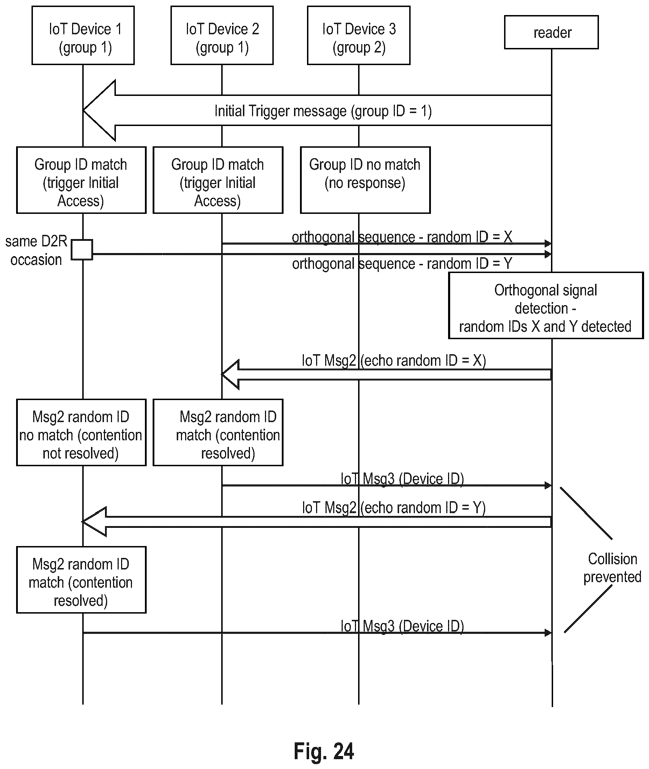

**Fig. 24** is a signaling diagram according to a variant of the First Solution using orthogonal sequences for transmitting the loT Msg1 of the initial access procedure. As apparent from Fig. 24, loT Devices 1 and 2, both belonging to group 1, are triggered by an initial trigger message indicating group 1. Both loT devices use the same D2R occasion to transmit the first message of the initial access procedure, e.g. following a corresponding indication in the initial trigger message.

IoT Device 1 determines a random ID = Y and determines the orthogonal sequence associated with said random ID = Y loT Device 1 then transmits the orthogonal sequence to the reader. Correspondingly, loT Device 2 determines a different random ID = X and determines the orthogonal sequence associated with said random ID = X. loT Device 2 then transmits the orthogonal sequence to the reader too.

The reader is able to simultaneously receive both mutually orthogonal sequences and detects the random IDs X and Y from the used orthogonal sequences. The reader may trigger the transmission of the response messages loT Msg2 one at a time for the detected random IDs, e.g. first for random ID = X. This facilitates that collisions of the subsequent loT Msg3s of the two loT Devices 1 and 2 can be prevented.

In the above, the use of the orthogonal sequences was described for loT Msg1 of the normal (e.g. 3-step) initial access procedure. On the other hand, the improvement is also applicable in the shortened (e.g. 2-step) initial access procedure, wherein the Msg1 is transmitted as an orthogonal sequence (e.g. the orthogonal sequence being associated with the Partial Device ID or a temporary ID).

In the above, the use of transmitting orthogonal sequences in a normal (e.g. 3-step) initial access procedure was described primarily for loT Msg1. On the other hand, the improvement is not limited in said respect, and the use of transmitting orthogonal sequences in a normal (e.g. 3-step or 4-step) initial access procedure can also be applied to the transmission of loT Msg3 (e.g. The orthogonal sequence being associated with the Partial Device ID or a temporary ID).

As a further exemplary improvement of the First Solution, a trigger prohibition mechanism is introduced, which prohibits an loT device to be triggered again by another initial trigger message after having been triggered by a preceding initial trigger message. In one example, the trigger prohibition mechanism can be implemented as a timer, which prohibits an loT device to be triggered again by another initial trigger message for a period of time after having been triggered the last time.

The trigger prohibition mechanism can be implemented for the above-described group-based triggering solutions, e.g. in scenarios where at least some of (or all of) the loT devices are grouped into several groups of loT devices. Depending on how the groups are assigned to a plurality of loT devices, there can be cases where loT devices would be triggered several times, because they belong to different groups of loT devices that are triggered by the reader.

The use of the trigger prohibition timer allows facilitates the advantage that a particular loT device can be prevented from being triggered again unnecessarily within a certain time window. This allows the loT device to conserve energy. Furthermore, by preventing loT devices to be triggered again unnecessarily, the probability of collision between the various triggered loT devices can be reduced as well.

For example, the loT devices that are capable to being assigned to multiple groups can be assigned to several small groups that can be triggered separately by the reader. The reader could trigger first some of the small groups, and then e.g. a larger group of loT devices. The trigger prohibition timer would then prohibit these loT devices from the small groups to be triggered again due to also belonging to the large group until the trigger prohibition timer is expired.

According to exemplary implementations, the value of the trigger prohibition timer may depend on the group that is triggered by the reader. The trigger prohibition timer may be applicable to only specific groups or to all groups. In particular, the loT device determines the timer value based on the group indicated by the initial trigger message.

For instance, each group for which the trigger prohibition timer is to be used, could be configured with a group-specific timer value. Alternatively, various groups may share (or overlap) the same timer value. As one example, assuming groups 1, 2, 3, the trigger prohibition timer may be configured such that an loT device applies 10ms to groups 1, 2 and 20ms to group 3.

The trigger prohibition mechanism can be activated / started at different timings. In one example, the trigger prohibition mechanism can be started with respect to the time at which the initial trigger message is received (or with a time offset), assuming that the loT device determines that it has been indeed triggered by said initial trigger message. In another example, the trigger prohibition mechanism can be started with respect to the time at which the loT device transmits the first message of the initial access procedure (or with a time offset).

In one example, the trigger prohibition mechanism can, but need not, also be performed at the reader side in the same or corresponding manner. This would allow the reader to predict the behaviour of the loT devices and may influence the determination of which group of loT devices should be triggered.

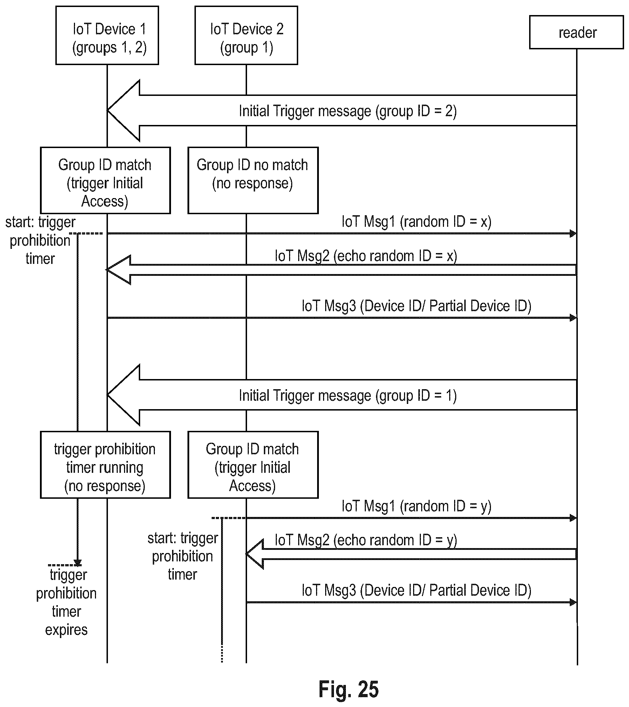

Fig. 25 is a signaling diagram according to a variant of the First Solution using a trigger prohibition timer as explained above by the loT devices. A normal (e.g. 3-step) initial access procedure is assumed. As apparent from Fig. 25, the loT Device 1 starts the trigger prohibition timer at the time of transmitting the loT Msg1 to the reader.

Furthermore, even when at a later point in time, the reader triggers the loT devices of group 1, the loT Device 1 is not triggered again, because the trigger prohibition timer is still running. IoT Device 2, on the other hand, belongs to group 1 as well, and was not previously triggered by the initial trigger message directed at group 2, such that loT Device 2 starts an initial access procedure with the reader.

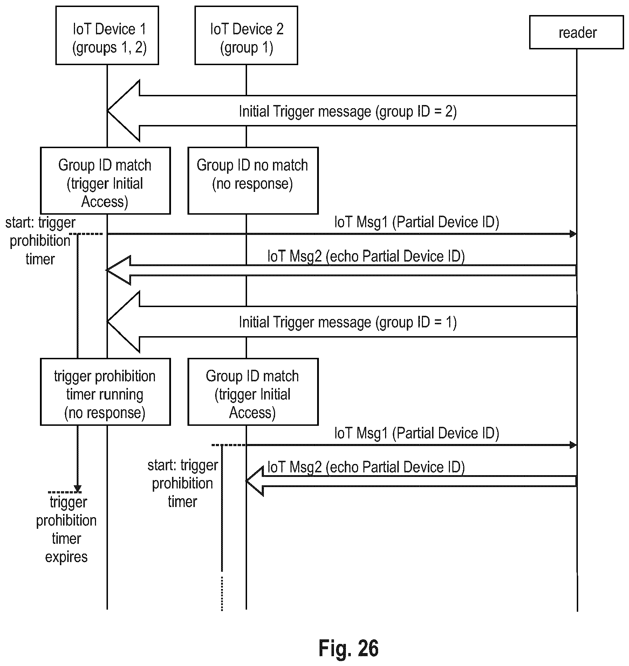

**Fig. 26** is a signaling diagram according to a variant of the First Solution using a trigger prohibition timer as explained above by the loT devices. A shortened (e.g. 2-step) initial access procedure is assumed. In the same manner as explained above in connection with Fig. 25, the first group-based trigger for group 2 results in triggering of loT Device 1 and subsequently the start of the trigger prohibition timer at loT Device 1. Because said trigger prohibition timer is still running when the reader triggers loT devices of group 1, loT Device 1 does not respond to the trigger. IoT Device 2, on the other hand, belongs to group 1 as well, and was not previously triggered by the initial trigger message directed at group 2, such that loT Device 2 starts an initial access procedure with the reader.

### Second Solution

According to the Second Solution, multiple transmit occasions and a selection rule are provided for transmitting messages of the initial access procedure.

The Second Solution can be implemented by an loT device that comprises the following. Circuitry of the loT device performs an initial access procedure with a reader, in response to receiving an initial trigger message from the reader. The circuitry determines one out of a plurality of transmit occasions for transmitting a message of the triggered initial access procedure to the reader, based on a selection rule. A transceiver of the loT device transmits the message of the initial access procedure to the reader in the determined transmit occasion.

A corresponding exemplary method of the Second Solution comprises the following steps performed by an loT device:
performing an initial access procedure with a reader, in response to receiving an initial trigger message from the reader,
determining one out of a plurality of transmit occasions for transmitting a message of the triggered initial access procedure to the reader, based on a selection rule,
transmitting the message of the initial access procedure to the reader in the determined transmit occasion.

One exemplary procedure is implemented by a reader that includes the following. Circuitry of the reader determines a probability of collision between messages sent by different loT devices triggered by an initial trigger message, which is transmitted by the reader for triggering one or more loT devices for transmission. In case the determined collision probability is larger than a threshold,
- the circuitry determines a plurality of transmit occasions usable by the loT device for transmitting a message of an initial access procedure from the loT device to the reader,
- a transceiver of the reader transmits a message to the loT devices informing on the determined plurality of transmit occasions.

A corresponding exemplary method comprises the following steps performed by a reader:
determining a probability of collision between messages sent by different loT devices triggered by an initial trigger message, which is transmitted by the reader for triggering one or more loT devices for transmission,
in case the determined collision probability is larger than a threshold,
   - determining a plurality of transmit occasions usable by the loT device for transmitting a message of an initial access procedure from the loT device to the reader,
   - transmitting a message to the loT devices informing on the determined plurality of transmit occasions.

The above-described improved loT initial access procedure at the loT device of the Second Solution facilitates a achieving the objective and overcoming at least some of the drawbacks explained above. For instance, it allows to reduce the contention between the loT devices that are triggered by the reader, because different transmit occasions are provided to the triggered loT devices and the loT devices might thus select different transmit occasions according to the selection rule. Furthermore, the selection rule may give control to the reader on how to handle potential collisions between the different triggered loT devices.

More detailed and exemplary implementations of the different processes of the improved loT initial access procedure at the loT device and reader side will be explained in the following.

As presented briefly above, the selection rule is to be used by the loT devices to determine one out of a plurality of previously configured transmit occasions. In one exemplary implementation of the Second Solution, the selection rule defines that the loT devices determine the one transmit occasion based on one or more different criteria.

According to one example criterion, the selection rule can be based on the Device ID of the loT device. For example, loT devices having even Device IDs may select transmit occasions that are located in odd time slots (or symbols), and loT devices having odd Device IDs may select transmit occasions that are located in even time slots (or symbols).

Instead or in addition, the selection rule can be based on channel measurements. For example, the channel measurements can be performed on a message received as part of the initial access procedure, e.g. the loT Msg2 of the normal initial access procedure. Alternatively, the channel measurements can be performed on any suitable reference signals received at the loT devices. According to an exemplary selection rule, in case the measured channel quality is less than a threshold, the loT device selects an early transmit occasion. Conversely, in case the measured channel quality is higher than the threshold, the loT device selects a late transmit occasion. Alternatively, the just explained selection rule could also be applied inversely.

In another example, the selection rule may define that the one transmit occasion is to be determined randomly among the plurality of transmit occasions.

The Second Solution is not limited to the above examples of a selection rule. Rather, other suitable selection rules are equally possible.

According to various exemplary embodiments, the selection rule to be used by the loT device can be configured by the reader, but alternatively also by the service provider or a manufacturer of the loT device. Correspondingly, information on the selection rule to be used can be provided to the loT device in different manners. In one example, the selection rule can be indicated in the initial trigger message transmitted by the reader to the loT device.

In another example, the selection rule can be indicated in a message of the initial access procedure, received by the loT device from the reader prior to the transmission of the message that will use the transmit occasion selected based on the indicated selection rule. For instance, the selection rule can be indicated in loT Msg2 of the normal initial access procedure, where the loT device will determine the one transmit occasion based on the selection rule for transmitting loT Msg3.

In the above two examples where the selection was indicated in a message, the indication of the selection rule can be implemented as an index that points to an entry of a table that is defined/configured in advance for the loT device (e.g. by a manufacturer or a service provider).

In still another example, the loT device already has configuration information stored, e.g. by the manufacturer, in advance, and may access said configuration information for determining the one transmit occasion among the plurality of transmit occasions.

In still other exemplary implementations, a combination of the above selection rule configurations can be adopted for the Second Solution. For instance, a default selection rule can be defined by the service provider or manufacturer in advance, e.g. to perform a random selection among a plurality of transmit occasions. Then, during operation of the loT device, the reader may have the possibility to override the default selection rule by dynamically indicating a selection rule in the initial trigger message. As a result, the loT device uses the default selection rule, in case no selection rule is dynamically indicated in the initial trigger message, but is also capable of using the dynamically indicated selection rule.

As presented briefly above, the Second Solution is based on that a plurality of transmit occasions are available to the loT devices for then selecting one of them during an initial access procedure. In one example, the plurality of transmit occasions may differ between each other in the timing of the occasions, such that loT devices determining different transmit occasions will transmit the message at different times. For instance, the different transmit occasions may refer to different symbols in the next slot, or to different slots. This definition of the plural transmit occasions facilitates avoiding collisions and contentions between the various loT devices triggered at the same time.

The plurality of transmit occasions can be configured by the reader, but alternatively also by the service provider or a manufacturer of the loT device (e.g. a manufacturer might follow definitions in a Technical Standard (e.g. by 3GPP or ETSI) and store corresponding firmware and information in the loT device). Correspondingly, information on the plurality of transmit occasions can be provided to the loT device in different manners. In one example, the plural transmit occasions can be indicated in the initial trigger message transmitted by the reader to the loT device.

In another example, the plurality of transmit occasions can be indicated in a message of the initial access procedure, received by the loT device from the reader prior to the transmission of the message that will use the transmit occasion selected based on the indicated selection rule. For instance, the transmit occasions can be indicated in loT Msg2 of the normal initial access procedure, where the loT device will determine the one transmit occasion of the plural transmit occasions for transmitting loT Msg3.

In still another example, the loT device already has configuration information stored, e.g. by the manufacturer, in advance, and may access said configuration information for determining the plurality of transmit occasions.

In still other exemplary implementations, a combination of the above transmit occasion configurations can be adopted for the Second Solution. For instance, a default set of transmit occasions can be defined by the service provider or manufacturer in advance. Then, during operation of the loT device, the reader may have the possibility to override the default set of transmit occasions by dynamically indicating a plurality of transmit occasions in the initial trigger message. As a result, the loT device uses the default transmit occasions, in case no transmit occasions are dynamically indicated in the initial trigger message, but is also capable of using the dynamically indicated transmit occasions.

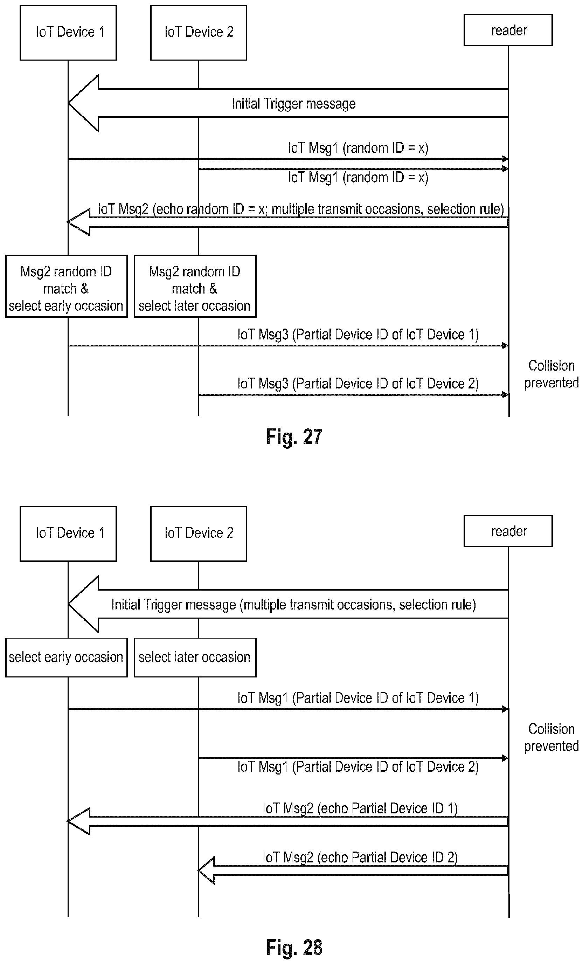

**Fig. 27** is a signaling diagram illustrating an exemplary implementation of the Second solution. As apparent therefrom, it is exemplarily assumed that the loT devices perform a normal (e.g. 3-step) initial access procedure. Correspondingly after being triggered by an initial trigger message sent by the reader, the loT devices transmit the first message loT Msg1 of the initial access procedure to the reader, respectively indicating the same random ID = x. In the example of Fig. 27, the reader is responsible for indicating the multiple transmit occasions and selection rule to the loT devices, here in loT Msg2 of the initial access procedure.

Based on the received plural transmit occasions and the selection rule, the loT devices select different transmit occasions for transmitting their respective loT Msg3. For instance, loT Device 1 might select an early transmit occasion, while loT Device 2 might select a later transmit occasion, based on the selection rule. By transmitting the loT Msg3s at different timings, a collision of these messages at the reader side can be prevented.

**Fig. 28** is a signaling diagram illustrating an exemplary implementation of the Second solution. As apparent therefrom, it is exemplarily assumed that the loT devices perform a shortened (e.g. 2-step) initial access procedure. In the example of Fig. 28, the reader is responsible for indicating the multiple transmit occasions and selection rule to the loT devices, here in the initial trigger message.

Based on the received plural transmit occasions and the selection rule, the loT devices select different transmit occasions for transmitting their respective loT Msg1. For instance, loT Device 1 might select an early transmit occasion, while loT Device 2 might select a later transmit occasion, based on the selection rule. By transmitting the loT Msg1s at different timings, a collision of these messages at the reader side can be prevented.

In the above example implementation explained in connection with Fig. 27, the plurality of transmit occasions and the selection rule is applied for transmitting loT Msg3 of the normal initial access procedure. In addition or instead, other example implementations allow the reader and loT devices to apply the multiple transmit occasions and selection rule also for transmitting loT Msg1 in response to receiving the initial trigger message. Consequently, the loT devices may determine one transmit occasions among a previously-configured plurality of transmit occasions based on a selection rule (configured e.g. during registration, or provided in the initial trigger message) and may transmit the loT Msg1 on the thus determined transmit occasion. Thus, the collision probability can be reduced not only for the loT Msg3 transmission but instead or also for the loT Msg1 transmission of the normal initial access procedure.

In a case where the Second Solution is applied to both loT Msg1 and loT Msg3 transmissions, the transmit occasions and selection rule applicable for the loT Msg1 transmission can be the same or different compared to the transmit occasions and selection rule applicable for the loT Msg3 transmission. For instance, in case the loT Device 1 decides to transmit loT Msg1 in the 1^{st} symbol two slots after the reception of the initial trigger message, then the loT Device 1 may also decide to transmit the loT Msg3 in the first symbol two slots after the reception of loT Msg2.

As presented above, in some example implementations, the reader may have control as to whether or not the loT device is provided with a plurality of transmit occasions and the selection rule so as to perform the improved loT initial access procedure of the Second Solution. According to some further improved exemplary implementations, whether or not the loT device is provided with a plurality of transmit occasions and the selection rule may depend on a probability of collision between messages sent by the different loT devices when triggered at the same time by an initial trigger message. In more detail, the reader may have the capability to determine such a probability of collision between messages sent by the different loT devices.

In case the determined collision probability is larger than a certain threshold, the reader may decide to use the improved mechanism of the Second Solution, which has the advantage that a collision probability is reduced by providing a plurality of transmit occasions, instead of just one, to the triggered loT devices.

Accordingly, the reader instructs the loT devices to use the improved mechanism of the Second Solution. For instance, the reader may transmit a suitable message, e.g. the initial trigger message, as already presented above, including information on one or both of the plural transmit occasions and the selection rule. In another example, both of the plural transmit occasions and selection rule may have been already configured in advance, and the reader only needs to activate the improved mechanism of the Second Solution, e.g. by transmitting a suitable indication (e.g. 1 bit) to the loT devices (e.g. in the initial trigger message).

In another example, none or only one of the plural transmit occasions and the selection rule may have been already configured in advance. The reader may need to first configure the missing element(s) (be it the plural transmit occasions, the selection rule or both), e.g. using the initial trigger message, such that the loT devices use the improved mechanism of the Second Solution.

In the above, it was briefly explained that the reader may determine a collision probability to then selectively activate or not activate at the loT devices the improved mechanism of the Second Solution. In the following, exemplary implementations on how the reader can determine or estimate a collision probability will be provided.

The reader may determine or estimate a collision probability based on the reception of various loT Msg1s during the normal initial access procedure. The collision probability may relate to the probability of collision at the reader side between various loT Msg3s subsequently transmitted by the loT devices to the reader. For instance, the higher the number of loT devices transmitting the loT Msg1s simultaneously, the higher also the collision probability of the subsequent loT Msg3 transmissions from the loT devices.

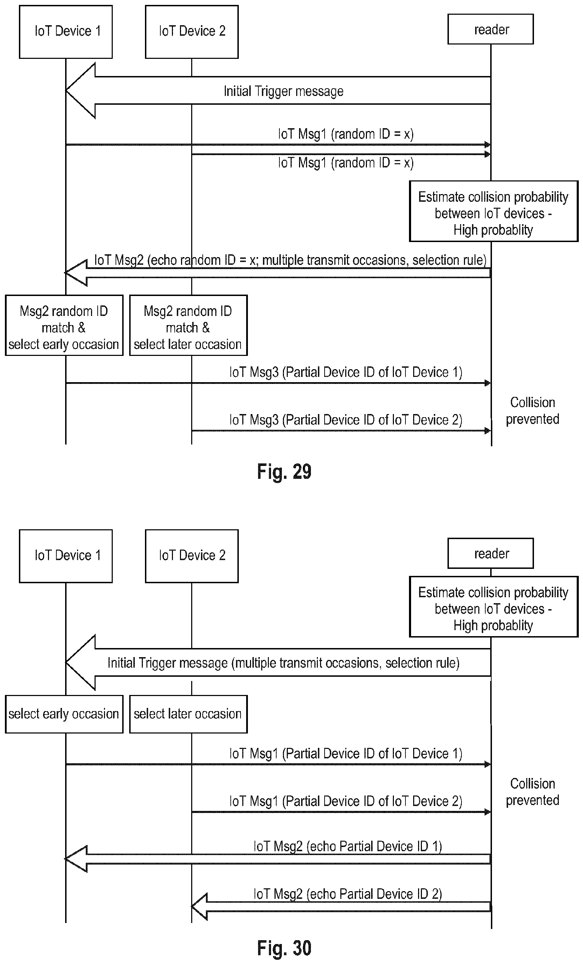

**Fig. 29** is a signaling diagram illustrating an exemplary implementation of the Second Solution. As apparent therefrom, it is exemplarily assumed that the loT devices perform a normal (e.g. 3-step) initial access procedure. Fig. 29 is comparable to Fig. 27 discussed above, but extended with the determining of the collision probability at the reader. As apparent from Fig. 29, when receiving the various loT Msg1s from loT Devices 1 and 2, the reader estimates the collision probability from the detected loT Msg1 signals. It is exemplarily assumed that the result is a high probability (e.g. higher than a probability threshold), such that the reader decides to provide the triggered loT devices with multiple transmit occasions and a selection rule, as already explained above for the Second Solution. Correspondingly, the loT Msg2 is transmitted to the loT devices including information on the multiple transmit occasions and selection rule. Correspondingly, the loT devices select different transmit occasions for transmitting the loT Msg3. This allows to reduce the collision probability of the subsequent loT Msg3 signal transmissions.

In the converse case that the estimated collision probability is low (e.g. lower than a probability threshold) (not illustrated in Fig. 29), the reader would decide against providing the triggered loT devices with multiple transmission occasions and a selection rule. Rather, the loT Msg2 is transmitted without information on the multiple transmit occasions and selection rule (see e.g. Fig. 19).

In another implementation, when a shortened (e.g. 2-step) initial access procedure is performed, the collision probability relates to the probability of collision at the reader side between various loT Msg1s transmitted by the loT devices to the reader in response to the initial trigger message. In one example, the reader may determine or estimate a collision probability before the triggering of the loT devices, e.g. based on the number of loT devices that might be triggered at the same time by the initial trigger message or by the number of commonly shared (partial) Device IDs among all the loT devices that might be triggered at the same time.

**Fig. 30** is a signaling diagram illustrating an exemplary implementation of the Second solution. As apparent therefrom, it is exemplarily assumed that the loT devices perform a shortened (e.g. 2-step) initial access procedure. Fig. 30 is comparable to Fig. 28 discussed above, but extended with the determining of the collision probability at the reader.

As apparent from Fig. 30, the reader estimates the collision probability before even triggering the loT devices. It is exemplarily assumed that the result is a high probability (e.g. higher than a probability threshold), such that the reader decides to provide the triggered loT devices with multiple transmit occasions and a selection rule, as already explained above for the Second Solution. Correspondingly, the initial trigger message is transmitted to the loT devices including information on the multiple transmit occasions and selection rule. Correspondingly, the loT devices select different transmit occasions for transmitting the loT Msg1.

In the converse case that the estimated collision probability is low (e.g. lower than a probability threshold) (not illustrated in Fig. 30), the reader would decide against providing the triggered loT devices with multiple transmission occasions and a selection rule. Rather, the initial trigger message is transmitted without information on the multiple transmit occasions and selection rule.

In the above, the Second Solution was explained with the example where the loT Msg3 or loT Msg1 carries the Partial Device ID of an loT device (see e.g. Fig. 28). However, the Second Solution is not limited thereby. Rather, instead of transmitting the Partial Device ID, also the (full) Device ID of an loT device can be transmitted with the loT Msg3 of the normal initial access procedure or with the loT Msg1 of the shortened initial access procedure. Using the Partial Device ID has the advantage that it facilitates concealing the device identity during the initial access procedure.

Still alternatively, instead of transmitting the Partial Device ID (or the (full) Device ID), a temporary ID assigned to an loT device can be transmitted with the loT Msg3 of the normal initial access procedure or with the loT Msg1 of the shortened initial access procedure. Details on the temporary ID have been already provided in connection with the First Solution (see e.g. Fig. 23) and need not be repeated here.

In connection with the First Solution, an orthogonal signal mechanism was mentioned, according to which an loT device transmits an orthogonal sequence (mutually orthogonal with respect to other sequences) as a message of the initial access procedure to the reader. Due to the orthogonality of the sequences, the reader is able to properly detect and process simultaneously received messages from the different loT devices, thereby avoiding interference and contention at the reader side. The orthogonal signal mechanism can also be implemented in the present Second Solution for transmitting loT Msg1 or loT Msg3 in the same or corresponding manner as described for the First Solution. Details on the orthogonal signal mechanism have been already provided in connection with the First Solution (see e.g. Fig. 24) and need not be repeated here.

### Third Solution

According to the Third Solution, a failure handling mechanism for the initial access procedure is provided.

The Third Solution can be implemented by an loT device that comprises the following. Circuitry of the loT device operates a failure handling mechanism for an initial access procedure performed between the loT device and the reader. The failure handling mechanism involves monitoring whether the initial access procedure has been successfully completed within a time period. In case the initial access procedure has not been successfully completed within the time period, the circuitry determines to repeat full or part of the initial access procedure.

A corresponding exemplary method of the Third Solution comprises the following steps performed by an loT device:
- operating a failure handling mechanism for an initial access procedure performed between the loT device and the reader, wherein the failure handling mechanism involves the step of monitoring whether the initial access procedure has been successfully completed within a time period.
- in case the initial access procedure has not been successfully completed within the time period, determining to repeat full or part of the initial access procedure.

The above-described improved loT initial access procedure at the loT device of the Third Solution facilitates a achieving the objective and overcoming at least some of the drawbacks explained above. For instance, it facilitates a robust handling of failures of the initial access procedure, and thereby facilitates increasing the success of the initial access procedure.

More detailed and exemplary implementations of the different processes of the improved loT initial access procedure at the loT device and reader side will be explained in the following.

According to the Third Solution, the failure handling mechanism can be implemented at the loT device and involves monitoring whether the initial access procedure has been successfully completed within a time period. The loT device expects the initial access procedure to be completed before the time period ends. In case the initial access procedure has not been successfully completed within the time period, the loT device determines to repeat full or part of the initial access procedure.

In one example, the initial access procedure (or part of it) can be repeated e.g. for a predetermined number of times. If the predetermined number of repetitions is reached, then, the loT device would not perform a further repetition of the initial access procedure.

According to one exemplary implementation of the Third Solution, the failure handling mechanism and thus the monitored time period can start in relation to a start of the initial access procedure. There are several possibilities for the starting points in time. In one example, the time period may start at the time of or an offset time after receiving the initial trigger message, assuming that the loT device is indeed triggered by the initial trigger message. Alternatively, in another example, the time period may start at the time of or an offset time after transmitting a first message of the triggered initial access procedure.

According to various exemplary embodiments, the time period for the failure handling mechanism can be configured by the reader, but alternatively also by the service provider or a manufacturer of the loT device. Using a fixed value, e.g. stored in the loT device by the manufacturer, could reduce the complexity of the loT device.

Correspondingly, information on the time period to be used can be provided to the loT device in different manners. In one example, the time period can be indicated in the initial trigger message transmitted by the reader to the loT device. In another example, the loT device already has configuration information stored, e.g. by the manufacturer, in advance, and may access said configuration information for determining the time period of the failure handling mechanism.

The same possibilities for configuring the time period are also applicable as how to configure when to start the failure handling mechanism, including for instance the point in time and optionally a time offset (if used). Correspondingly, the starting time (and the time offset) could be configured by the manufacturer, a service provider or transmitted in a message from the reader (e.g. in the initial trigger message).

Alternatively, instead of implementing the failure handling mechanism of the timer with a time period to monitor the elapsed time after the device starts the initial access procedure, another exemplary implementation is based on a counter which counts the number of slots or slot boundaries after device starts the initial access procedure.

The failure handling mechanism monitors whether the initial access procedure is successful. According to one exemplary implementation, the loT device may consider an initial access procedure as successful when receiving or transmitting a last message of the triggered initial access procedure. Correspondingly, the loT device deactivates the failure handling mechanism when it receives or transmits the last message of the initial access procedure. In one example, the last message can be an loT Msg4 or an loT Msg3 of the normal (e.g. 4-step respectively 3-step) initial access procedure. In another example, the last message can be the loT Msg2 of the shortened (e.g. 2-step) initial access procedure.

Alternatively, the failure handling mechanism may also be deactivated when the loT device receives another message of another procedure, which is subsequent to the initial access procedure. It is assumed that said subsequent procedure is only performed between the reader and loT device, in case the preceding initial access procedure was successful.

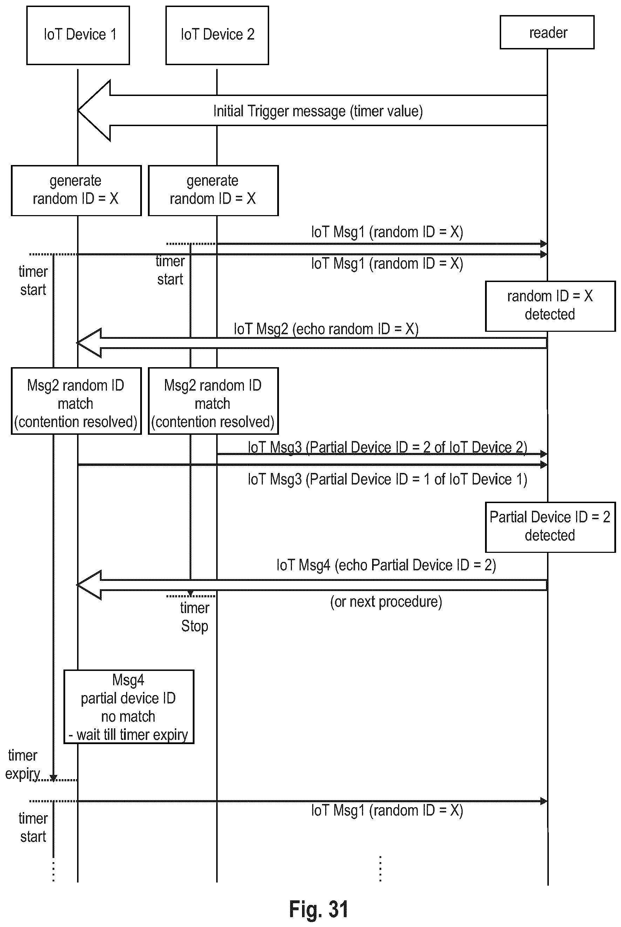

**Fig. 31** illustrates a signaling diagram illustrating an exemplary implementation of the Third Solution. As apparent therefrom, it is exemplarily assumed that the loT devices perform a normal (e.g. 4-step) initial access procedure. The failure handling mechanism is implemented as a failure handling timer at the loT devices and is activated by loT Devices 1 and 2 when transmitting the loT Msg1 of the initial access procedure.

The loT Msg3 transmissions from loT Devices 1 and 2 may encounter collision, but the reader may still detect at least one loT Msg3 (in Fig. 31 exemplarily the one from loT Device 2 only). The remaining loT Msg3 (in Fig. 31, the one from loT Device 1) may be lost due to collision/interference.

Although not assumed in Fig. 31, in another scenario, all loT Msg3 of the loT devices could get lost and would not be detected at the reader.

As further apparent from Fig. 31, the failure handling timer is stopped when receiving loT Msg4 of the triggered initial access procedure, properly addressed to the loT device. In particular, even though loT Device 1 ma receive the loT Msg4 too, it is not the loT Msg4 belonging to the initial access procedure initiated by loT Device 1 but the loT Msg4 includes the Partial Device ID = 2 of loT Device 2 and is thus rather part of the initial access procedure initiated by loT Device 2. In the present example implementation of Fig. 31, loT Device 2, upon receiving the loT Msg4 addressed to its Partial Device ID = 2 (as transmitted with loT Msg3 to the reader), stops the failure handling timer, because the triggered initial access procedure can be considered to be successfully completed.

As a further alternative, upon successfully detecting Partial Device ID 2 of loT Msg3, the reader, instead of transmitting the loT Msg4 to the loT Device 2, may proceed with the next procedure and may transmit a first message of said next procedure to loT Device 2 (possibly addressed to the (Partial) Device ID of loT Device 2. Also in this case, the loT Device 2 considers the initial access procedure to be successfully completed and stops the failure handling timer.

The loT Msg4 is not necessarily required within the initial access procedure. For instance, loT Msg4 would not be necessary to send (e.g. can be skipped) on R2D when all the triggered devices are expected to continue with the next A-loT procedures, for example, an A-loT inventory procedure or A-IoT command procedure is performed - after the initial access.

In some other cases, where the initial access procedure is performed alone, or the intended A-loT procedure is completed along with the A-IoT initial access procedure, (for example, A-loT inventory procedure is triggered to extract the full device ID which is sent on loT Msg3 during random access), then, loT Msg4 is sent to indicate the completion of random-access procedure to each of the detected devices.

Referring again to Fig. 31, the failure handling timer operated at loT Device 1 keeps running until its expiry, because no loT Msg4 addressed to the Partial Device ID = 1 of loT Device 1 (as transmitted with loT Msg3 to the reader) was received by the loT Device 1 in time. As a result of the expiry of the failure handling timer, loT Device 1 repeats performing the initial access procedure, in this example by again transmitting loT Msg1 to the reader. As before, the failure handling timer is started at the loT Device 1 upon transmitting the loT Msg1.

In the example of Fig. 31, even if both loT Msg1 of loT Devices 1 and 2 are received simultaneously at the reader, the reader is assumed to be able to still detect such signals and to identify the corresponding random ID carried by the loT Msg1.

Moreover, the reception of the loT Msg2, indicating random ID = X (as transmitted to the reader with loT Msg1) at the loT devices, can be considered to resolve the contention for both loT devices. However, this does not mean that the initial access procedure is successfully completed. As apparent from Fig. 31, contention might still occur with loT Msg3. Consequently, in one example, the failure handling mechanism is not stopped with the reception of loT Msg2 of the normal initial access procedure but at a later point in time (e.g. when receiving loT Msg4).

For the above explanation of the Third Solution based on Fig. 31, it was assumed that a normal (e.g. 4-step or 3-step) initial access procedure is performed. However, the present Third Solution is not limited in said respect and can be applied equally to a shortened (e.g. 2-step) initial access procedure.

As presented above for the Third Solution, a single failure handling mechanism was presented for monitoring the entire initial access procedure, including the contention resolution at loT Msg2 reception and the successful initial access procedure completion (e.g. by loT Msg4 reception or next procedure start). As a further different exemplary implementation of the Third Solution, two separate failure handling mechanisms could be provided.

The first failure handling mechanism would be monitoring the contention resolution, resolved with the reception of the loT Msg2 addressed to the random ID previously transmitted to the reader in loT Msg1. In the same manner as discussed above for the single failure handling mechanism, the first failure handling mechanism could be started by the loT device with the transmission of loT Msg1 and would be stopped at the successful reception of the loT Msg2 (properly addressed).

The second failure handling mechanism would be monitoring the subsequent completion of the already triggered initial access procedure after transmission of loT Msg3. Correspondingly, the loT device starts the second failure handling mechanism with the transmission of the loT Msg3 and stops same upon successful completion (e.g. the reception of the loT Msg4 or a message of the subsequent procedure (addressed to the loT device)).

Alternatively, a single failure handling mechanism, instead of two failure handling mechanisms, could be used to separately monitor the contention resolution and the successful completion of the initial access procedure. In such case, the single failure handling mechanism would be started with the transmission of loT Msg1, stopped with the reception of loT Msg2, restarted with the transmission of loT Msg3, and stopped again with the reception of the loT Msg4 or a message of the subsequent procedure (addressed to the loT device).

Using the separate failure handling mechanism for monitoring the contention resolution allows to identify a failure of the initial access procedure at an earlier time, namely when the contention is not resolved. Correspondingly, the initial access procedure can be repeated at an earlier time.

In the above, the Third Solution was explained with the example where the loT Msg3 or the loT Msg1 carries the Partial Device ID of an loT device (see e.g. Fig. 31). However, the Third Solution is not limited thereby. Rather, instead of transmitting the Partial Device ID, also the (full) Device ID of an loT device can be transmitted with the loT Msg3 of the normal initial access procedure or with the loT Msg1 of the shortened initial access procedure. Using the Partial Device ID has the advantage that it facilitates concealing the device identity during the initial access procedure.

Still alternatively, instead of transmitting the Partial Device ID (or the (full) Device ID), a temporary ID assigned to an loT device can be transmitted with the loT Msg3 of the normal initial access procedure or with the loT Msg1 of the shortened initial access procedure. Details on the temporary ID have been already provided in connection with the First Solution (see e.g. Fig. 23) and need not be repeated here.

In connection with the First Solution, an orthogonal signal mechanism was mentioned, according to which an loT device transmits an orthogonal sequence (mutually orthogonal with respect to other sequences) as a message of the initial access procedure to the reader. Due to the orthogonality of the sequences, the reader is able to properly detect and process simultaneously received messages from the different loT devices, thereby avoiding interference and contention at the reader side. The orthogonal signal mechanism can also be implemented in the present Third Solution for transmitting loT Msg1 or loT Msg3 in the same or corresponding manner as described for the First Solution. Details on the orthogonal signal mechanism have been already provided in connection with the First Solution (see e.g. Fig. 24) and need not be repeated here.

The Third Solution can be applied to both advanced reader (capable of partially or fully detecting colliding messages, e.g. loT Msg1 or loT Msg3) and to less complex readers (where no colliding signals, e.g. loT Msg1 or loT Msg3, can be detected).

### Fourth Solution

According to the Fourth Solution, two or more of the First, Second and Third Solutions can be combined together, i.e. used together, so as to benefit from the various respective advantages.

In summary, the First Solution provides a group-based triggering mechanism, which facilitates reducing the contention between the loT devices that are triggered by the reader. Furthermore, the reader has more flexibility in choosing the appropriate one or more groups of loT devices (e.g. larger vs smaller groups) for triggering. The Second Solution provides an improved initial access procedure with increased transmit occasions, which also facilitates reducing the contention between the loT devices that are triggered by the reader. The Third Solution provides a failure handling mechanism, which facilitates a robust handling of failures of the initial access procedure.

The Fourth Solution allows to provide a more comprehensive solution, combining the different improvements of the First, Second and Third Solutions to provide a further improved loT initial access procedure.

In the following, several implementations of possible Fourth Solutions will be presented. The following should only be understood as examples.

A first possible Fourth Solution combines:
- the group-based triggering mechanism of the First Solution (e.g. Fig. 18), and
- the failure handling timer of the Third Solution (e.g. Fig. 31).

One variant of the first Fourth Solution implements the multi-group-based triggering for either a normal or shortened initial access procedure (see Fig. 21, or 22) from the First Solution.

A second possible Fourth Solution combines:
- the group-based triggering mechanism of the First Solution which also uses the trigger prohibition timer (see Fig. 25, or 26), and
- the failure handling timer of the Third Solution (e.g. Fig. 31).

One variant of the second Fourth Solution implements the multi-group-based triggering for either a normal or shortened initial access procedure (see Fig. 21, 22) from the First Solution.

A third possible Fourth Solution combines
- the group-based triggering mechanism of the First Solution which also uses the trigger prohibition timer (see Fig. 25, or 26) and
- the failure handling timer of the Third Solution (e.g. Fig. 31) and
- the increased transmit occasions of the Second Solution (e.g. Fig. 27, 28, 29, or 30).

One variant of the third Fourth Solution implements the multi-group-based triggering for either a normal or shortened initial access procedure (see Fig. 21, or 22) from the First Solution.

A fourth Fourth Solution combines
- the group-based triggering mechanism of the First Solution based on triggering a single group (e.g. Fig. 20), and
- the failure handling timer of the Third Solution (e.g. Fig. 31).

A fifth Fourth Solution combines
- the group-based triggering mechanism of the First Solution based on triggering a single group (e.g. Fig. 20), and
- the failure handling timer of the Third Solution (e.g. Fig. 31) and
- the increased transmit occasions of the Second Solution (e.g. Fig. 27, 28, 29, or 30).

However, the Fourth Solution is not limited to the above exemplary combinations, but rather covers also other combinations of two or more of the First, Second and Third Solutions (and their respective variants and implementations).

Moreover, another exemplary improvement can be provided and combined with any of the above First, Second, Third and Fourth Solutions. According to this improvement, the reader can perform another mechanism according to which the reader may repeat the transmission of the initial trigger message, in certain failure cases. In particular, it is assumed that the reader transmits an initial trigger message to the loT devices (e.g. according to one of the First, Second, Third or Fourth Solutions).

The reader may be aware of the number of loT devices that will be expected to respond to the triggering, by initiating an initial access procedure and transmitting an loT Msg1 to the reader. For instance, by the end of the triggering, the reader expects to have received a response from all the available devices.

In case the number of loT devices responding to this initial trigger message is less than expected (or less by a certain number), the reader repeats the transmission of the initial trigger message. For instance, some loT devices may fail to respond successfully during the initial access procedure (for various reasons). These failed loT devices may require however another trigger from the reader, e.g. that the reader repeats the transmission of the initial trigger message. Due to the repeated initial trigger message, the likelihood that all loT devices will have been triggered successfully is increased.

According to one variant thereof, by using the trigger prohibition timer presented above in connection with the First Solution (see particularly Fig. 25, or 26), a repeated triggering of loT devices that were successfully triggered already by the first initial trigger message is avoided. While the trigger prohibition timer is running, the loT devices will not be triggered again by the repeated initial trigger message. This allows the loT devices to save energy and also reduces the probability of contention and interference for those loT devices that will be triggered by the retransmission of the initial trigger message.

### Further Variants, including Hardware and Software Implementation of the present disclosure

In the following, variants of the present disclosure will be described.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, an Internet of Things, IoT, device is provided comprising the following. A transceiver of the IoT device receives an initial trigger message from a reader, indicating a group of IoT devices to be triggered for transmission. Circuitry of the IoT device determines whether the IoT device is triggered by the initial trigger message, based on the indicated group of IoT devices and one or more groups to which the IoT device is assigned. In case the circuitry determines that the loT device is triggered by the initial trigger message, the IoT device performs an initial access procedure with the reader.

According to a second aspect provided in addition to the first aspect, the circuitry determines an identification, ID, to be transmitted to the reader as part of the initial access procedure. In an optional implementation, the circuitry determines an orthogonal sequence that is associated with the determined ID, as the orthogonal sequence to be used for transmitting the message to the reader. The transceiver transmits a message of the initial access procedure to the reader as the determined orthogonal sequence. In an optional implementation, in a normal initial access procedure, the message is a first message of the normal initial access procedure, and said ID indicated by said first message is a random ID. In an optional implementation, in a shortened initial access procedure, the message is a first message of the shortened initial access procedure, and said ID indicated by said first message is an identification of the IoT device, such as full device ID, a partial device ID or a temporary device ID.

According to a third aspect provided in addition to the first or second aspect, the IoT device is associated with one or more than one group of IoT devices, and the initial trigger message indicates at least two groups of IoT devices. The circuitry determines that the IoT device is triggered by the initial trigger message, in case the IoT device is associated with:
- at least one of the at least two groups of IoT devices indicated by the initial trigger message, or
- all of the at least two groups of IoT devices indicated by the initial trigger message, and

In an optional implementation thereof, information on whether an IoT device is triggered by being associated with at least one of the at least two groups of IoT devices indicated by the initial trigger message or by being associated with all of the at least two groups of IoT devices indicated by the initial trigger message is included in the initial trigger message or is configured as a default in the IoT device.

According to a fourth aspect, provided in addition to any one of the first to third aspects, the circuitry determines a temporary ID for the IoT device, and transmits the temporary ID to the reader in a message of the initial access procedure. In an optional implementation thereof, the temporary ID is transmitted in the initial access procedure message instead of a full or partial identification of the IoT device. In an optional implementation thereof, the temporary ID is assigned by the reader to the IoT device for use during the initial access procedure. In an optional implementation thereof, the circuitry determines to perform a shortened initial access procedure in case the loT device is assigned with the temporary ID for use in the initial access procedure.

According to a fifth aspect, provided in addition to any one of the first to fourth aspects, the circuitry determines one or more groups of IoT devices to which it belongs, based on configuration information
- stored in the IoT device by a manufacturer of the IoT device, or
- received by the transceiver from a service provider, or
- received by the transceiver during registration of the IoT device with a reader, or
- received by the transceiver from the reader after registration of the IoT device with the reader.

In an optional implementation thereof, the group of IoT devices is indicated based on a group ID carried in the initial trigger message.

According to a sixth aspect, provided in addition to any of the first to fifth aspects, the triggered initial access procedure is a normal initial access procedure or a shortened initial access procedure. The normal initial access procedure includes at least:
- a first message, transmitted by the transceiver to the reader, the first message including a random ID,
- a second message, received by the transceiver from the reader, optionally wherein the second message includes the random ID of the first message or another identification,
- a third message, transmitted by the transceiver to the reader, including an identification of the loT device,
- optionally a fourth message, received by the transceiver from the reader.

The shortened initial access procedure includes at least:
- a first message, transmitted by the transceiver to the reader, the first message including an identification of the IoT device and optionally including a random ID,
- a second message received by the transceiver from the reader, optionally wherein the second message includes the identification of the first message or another identification.

In an optional implementation thereof, the circuitry determines whether a possible contention of the first message with another first message transmitted by another IoT device is resolved, in case the second message of the normal or shortened initial access procedure includes the identification transmitted with the first message to the reader. In an optional implementation thereof, the initial trigger message indicates whether to perform the normal initial access procedure or the shortened initial access procedure.

According to a seventh aspect, provided in addition to any one of the first to sixth aspects, the circuitry operates a trigger prohibition mechanism, prohibiting the IoT device to be triggered again by another initial trigger message after having been triggered by the initial trigger message. In an optional implementation thereof, the trigger prohibition mechanism is a trigger prohibition timer, prohibiting the IoT device to be triggered for a time period after having been triggered, optionally wherein the circuitry determines the time period used for the trigger prohibition timer based on the group indicated by the initial trigger message. In an optional implementation thereof, the circuitry starts the trigger prohibition mechanism in response to the IoT device being triggered by the initial trigger message or in response to transmitting a first message of the initial access procedure triggered by the initial trigger message.

According to an eighth aspect, a reader is provided comprising circuitry groups a plurality of IoT devices to a plurality of groups of IoT devices, wherein the circuitry determines one group of IoT devices that should be triggered for transmission. A transceiver of the reader transmits an initial trigger message, indicating the determined one group of IoT devices. The circuitry performs an initial access procedure with IoT devices of the triggered group of IoT devices.

According to a ninth aspect, provided in addition to the eighth aspect, the grouping of the plurality of IoT devices to a plurality of groups by the circuitry is based on one or more of:
- a type of the IoT devices,
- cryptographic capabilities of the IoT devices,
- cryptographic algorithm capabilities of the IoT devices,
- operator registered for the IoT devices,
- a usage type of the IoT devices,
- an application-specific usage type of the IoT devices,
- an identification of the IoT devices,
- a supervisory node of the IoT device, and
- an assignment format of a device ID of IoT devices.

In an optional implementation thereof, one IoT device is grouped into one or more than one of the plurality of groups of IoT devices.

According to a tenth aspect, provided in addition to the eighth or ninth aspect, at least one of the IoT devices is grouped into more than one of the plurality of groups of IoT devices, wherein the circuitry determines at least two groups of IoT devices to be triggered for transmission, such that any IoT device is triggered in case the IoT device is associated with:
- at least one of the at least two groups of loT devices, or
- all of the at least two groups of IoT devices.

In an optional implementation thereof, information on whether an IoT device is triggered by being associated with at least one of the at least two groups of IoT devices indicated by the initial trigger message or by being associated with all of the at least two groups of IoT devices indicated by the initial trigger message is included in the initial trigger message or is configured as a default in the IoT device.

According to an eleventh aspect, provided in addition to any one of the eighth to tenth aspects, the circuitry determines another group of IoT devices that should be triggered for transmission, after the initial access procedure with the preceding triggered group of IoT devices has started or has completed. In an optional implementation thereof, the transceiver, upon receiving one message of the initial access procedure respectively from at least two IoT devices, transmits in return
- first, another message of the initial access procedure to one of the at least two IoT devices and
- then, after a time period, another message of the initial access procedure to another one of the at least two IoT devices.

According to a twelfth aspect, provided in additional to any one of the eighth to eleventh aspects, the circuitry generates a temporary ID for each IoT device within a group of IoT devices for use during the initial access procedure, the temporary ID being unique within a group of IoT devices. The transceiver transmits information to the loT devices of the group, informing each IoT device of the assigned temporary ID.

According to a thirteenth aspect, provided in addition to any one of the eighth to twelfth aspects, the circuitry operates a trigger prohibition mechanism, according to which an IoT device is prohibited to be triggered again by another initial trigger message after having been triggered by the initial trigger message. In an optional implementation thereof, the trigger prohibition mechanism is a trigger prohibition timer, prohibiting the IoT device to be triggered for a time period after having been triggered, optionally wherein the circuitry, in operation, determines the time period used for the trigger prohibition timer based on the group indicated by the initial trigger message.

According to a fourteenth aspect, a method is provided comprising the following steps performed by an Internet of Things, IoT, device:
receiving an initial trigger message from a reader, indicating a group of IoT devices to be triggered for transmission;
determining whether the IoT device is triggered by the initial trigger message, based on the indicated group of IoT devices and one or more groups to which the IoT device is assigned,
in case the circuitry determines that the IoT device is triggered by the initial trigger message, performing by the IoT device an initial access procedure with the reader.

According to a fifteenth aspect, a method is provided, comprising the following steps performed by a reader:
grouping a plurality of IoT devices to a plurality of groups of IoT devices,
determining one group of IoT devices that should be triggered for transmission,
transmitting an initial trigger message, indicating the determined one group of IoT devices,
performing an initial access procedure with IoT devices of the triggered group of IoT devices.

According to a sixteenth aspect, an integrated circuit is provided, which, in operation, controls a process of an Internet of Things, IoT, device, the process comprising the following steps performed by the IoT device:
receiving an initial trigger message from a reader, indicating a group of IoT devices to be triggered for transmission;
determining whether the IoT device is triggered by the initial trigger message, based on the indicated group of IoT devices and one or more groups to which the IoT device is assigned, in case the circuitry determines that the IoT device is triggered by the initial trigger message, performing by the IoT device an initial access procedure with the reader.

According to a seventeenth aspect, an integrated circuit is provided, which controls a process of a reader, the process comprising the following steps performed by the reader:
grouping a plurality of IoT devices to a plurality of groups of IoT devices,
determining one group of IoT devices that should be triggered for transmission,
transmitting an initial trigger message, indicating the determined one group of IoT devices, and
performing an initial access procedure with IoT devices of the triggered group of IoT devices.

According to an eighteenth aspect, an Internet of Things, IoT, device is provided comprising the following. Circuitry of the IoT device performs an initial access procedure with a reader, in response to receiving an initial trigger message from the reader. The circuitry determines one out of a plurality of transmit occasions for transmitting a message of the triggered initial access procedure to the reader, based on a selection rule. A transceiver of the IoT device transmits the message of the initial access procedure to the reader in the determined transmit occasion.

According to a nineteenth aspect, provided in addition to the eighteenth aspect, the selection rule is indicated by:
- the initial trigger message, or
- a message of the initial access procedure, received by the IoT device from the reader prior to the transmission of the message using the determined transmit occasion, or
- a configuration stored in the IoT device in advance.

In an optional implementation thereof, the selection rule defines how the IoT device is to determine the one transmit occasion out of the plurality of transmit occasions and defines:
- to determine the one transmit occasion based on the device ID, or
- to determine the one transmit occasion based on channel measurements, or
- to randomly determine the one transmit occasion out of the plurality of transmit occasions.

According to a 20^{th} aspect, provided in addition to the eighteenth or nineteenth aspect, the plurality of transmit occasions are indicated by:
- the initial trigger message, or
- a message of the initial access procedure, received by the IoT device from the reader prior to the transmission of the message using the determined transmit occasion, or
- a configuration stored in the IoT device in advance.

According to a 21^{st} aspect, provided in addition to any one of the eighteenth to 20^{th} aspects, the circuitry operates a failure handling mechanism for the initial access procedure. The failure handling mechanism involves monitoring whether the initial access procedure has been successfully completed within a time period. In case the initial access procedure has not been successfully completed within the time period, the circuitry determines to repeat full or part of the initial access procedure.

According to a 22^{nd} aspect provided in addition to any one of the eighteenth to 21^{st} aspects, the time period starts in relation to the start of the initial access procedure, including at one of the following points in time:
- at the time of or an offset time after receiving the initial trigger message,
- at the time of or an offset time after transmitting a first message of the triggered initial access procedure,

In an optional implementation thereof, the offset time is indicated by the initial trigger message or determined based on configuration information stored in advance in the IoT device. In an optional implementation thereof, the time period of the failure handling mechanism is indicated by the initial trigger message or determined based on configuration information stored in advance in the IoT device.

According to a 23^{rd} aspect, provided in addition to any one of the eighteenth to 22^{nd} aspects, the failure handling mechanism is deactivated for the triggered initial access procedure, when the IoT device receives a last message of the triggered initial access procedure or another message of a subsequent procedure. In an optional implementation thereof, the failure handling mechanism is performed by the circuitry, using a timer or a counter for counting passing slots.

According to a 24^{th} aspect, a reader is provided comprising the following. Circuitry of the reader determines a probability of collision between messages sent by different IoT devices triggered by an initial trigger message, transmitted by the reader for triggering one or more IoT devices for transmission. In case the determined collision probability is larger than a threshold,
- the circuitry determines a plurality of transmit occasions usable by the IoT device for transmitting a message of an initial access procedure from the IoT device to the reader, and/or
- the circuitry, in operation, determines a selection rule usable by the IoT devices to determine one transmit occasion out of the plurality of transmit occasions for transmitting the message of the triggered initial access procedure to the reader, and

- wherein a transceiver, in operation, transmits a message to the IoT devices informing on the determined plurality of transmit occasions and/or the determined selection rule.

According to a 25^{th} aspect, a method is provided comprising the following steps performed by an Internet of Things, IoT, device:
- performing an initial access procedure with a reader, in response to receiving an initial trigger message from the reader,
- determining one out of a plurality of transmit occasions for transmitting a message of the triggered initial access procedure to the reader, based on a selection rule,
- transmitting the message of the initial access procedure to the reader in the determined transmit occasion.

According to a 26^{th} aspect, a method is provided comprising the following steps performed by a reader:
determining a probability of collision between messages sent by different IoT devices triggered by an initial trigger message, transmitted by the reader for triggering one or more IoT devices for transmission,
in case the determined collision probability is larger than a threshold,
   - determining a plurality of transmit occasions usable by the IoT device for transmitting a message of an initial access procedure from the IoT device to the reader, and/or
   - determining a selection rule usable by the IoT devices to determine one transmit occasion out of the plurality of transmit occasions for transmitting the message of the triggered initial access procedure to the reader, and
   - transmitting a message to the IoT devices informing on the determined plurality of transmit occasions and/or the determined selection rule.

According to a 27^{th} aspect, an integrated circuit is provided, which, in operation, controls a process of an Internet of Things, IoT, device, the process comprising the following steps performed by the IoT device:
- performing an initial access procedure with a reader, in response to receiving an initial trigger message from the reader,
- determining one out of a plurality of transmit occasions for transmitting a message of the triggered initial access procedure to the reader, based on a selection rule,
- transmitting the message of the initial access procedure to the reader in the determined transmit occasion.

According to a 28^{th} aspect, an integrated circuit is provided, which, in operation, controls a process of a reader, the process comprising the following steps performed by the reader:
determining a probability of collision between messages sent by different IoT devices triggered by an initial trigger message, transmitted by the reader for triggering one or more IoT devices for transmission,
in case the determined collision probability is larger than a threshold,
   - determining a plurality of transmit occasions usable by the IoT device for transmitting a message of an initial access procedure from the IoT device to the reader, and/or
   - determining a selection rule usable by the IoT devices to determine one transmit occasion out of the plurality of transmit occasions for transmitting the message of the triggered initial access procedure to the reader, and
   - transmitting a message to the IoT devices informing on the determined plurality of transmit occasions and/or the determined selection rule.

## Claims

1. An Internet of Things, IoT, device comprising:
a transceiver, which in operation, receives an initial trigger message from a reader, indicating a group of IoT devices to be triggered for transmission;
circuitry, which in operation, determines whether the IoT device is triggered by the initial trigger message, based on the indicated group of IoT devices and one or more groups to which the IoT device is assigned,
in case the circuitry determines that the IoT device is triggered by the initial trigger message, the IoT device performs an initial access procedure with the reader.

2. The IoT device according to claim 1, wherein the circuitry, in operation, determines an identification, ID, to be transmitted to the reader as part of the initial access procedure,
optionally wherein the circuitry, in operation, determines an orthogonal sequence that is associated with the determined ID, as the orthogonal sequence to be used for transmitting the message to the reader, and the transceiver, in operation, transmits a message of the initial access procedure to the reader as the determined orthogonal sequence,
optionally wherein in a normal initial access procedure, the message is a first message of the normal initial access procedure, and said ID indicated by said first message is a random ID,
optionally in a shortened initial access procedure, the message is a first message of the shortened initial access procedure, and said ID indicated by said first message is an identification of the IoT device, such as full device ID, a partial device ID or a temporary device ID.

3. The IoT device according to claim 1 or 2, wherein the IoT device is associated with one or more than one group of IoT devices, and the initial trigger message indicates at least two groups of IoT devices, wherein the circuitry, in operation, determines that the IoT device is triggered by the initial trigger message, in case the IoT device is associated with:
- at least one of the at least two groups of IoT devices indicated by the initial trigger message, or
- all of the at least two groups of IoT devices indicated by the initial trigger message, and
optionally wherein information on whether an IoT device is triggered by being associated with at least one of the at least two groups of IoT devices indicated by the initial trigger message or by being associated with all of the at least two groups of IoT devices indicated by the initial trigger message is included in the initial trigger message or is configured as a default in the IoT device.

4. The IoT device according to any one of claims 1 to 3, wherein the circuitry, in operation, determines a temporary ID for the IoT device, and transmits the temporary ID to the reader in a message of the initial access procedure,
optionally wherein the temporary ID is transmitted in the initial access procedure message instead of a full or partial identification of the IoT device,
optionally wherein the temporary ID is assigned by the reader to the IoT device for use during the initial access procedure,
optionally wherein the circuitry, in operation, determines to perform a shortened initial access procedure in case the IoT device is assigned with the temporary ID for use in the initial access procedure.

5. The IoT device according to anyone of claims 1 to 4, wherein the circuitry, in operation, operates a trigger prohibition mechanism, prohibiting the IoT device to be triggered again by another initial trigger message after having been triggered by the initial trigger message,
optionally wherein the trigger prohibition mechanism is a trigger prohibition timer, prohibiting the IoT device to be triggered for a time period after having been triggered, optionally wherein the circuitry, in operation, determines the time period used for the trigger prohibition timer based on the group indicated by the initial trigger message, and
optionally wherein the circuitry, in operation, starts the trigger prohibition mechanism in response to the IoT device being triggered by the initial trigger message or in response to transmitting a first message of the initial access procedure triggered by the initial trigger message.

6. A reader comprising:
circuitry, which in operation, groups a plurality of IoT devices to a plurality of groups of IoT devices,
the circuitry, which in operation, determines one group of IoT devices that should be triggered for transmission,
a transceiver, which in operation, transmits an initial trigger message, indicating the determined one group of IoT devices,
the circuitry, which in operation, performs an initial access procedure with IoT devices of the triggered group of IoT devices.

7. The reader according to claim 6, wherein the grouping of the plurality of IoT devices to a plurality of groups by the circuitry is based on one or more of:
- a type of the IoT devices,
- cryptographic capabilities of the IoT devices,
- cryptographic algorithm capabilities of the IoT devices,
- operator registered for the IoT devices,
- a usage type of the IoT devices,
- an application-specific usage type of the IoT devices,
- an identification of the IoT devices,
- a supervisory node of the IoT device, and
- an assignment format of a device ID of IoT devices,
optionally wherein one IoT device is grouped into one or more than one of the plurality of groups of IoT devices.

8. The reader according to claim 6 or 7, wherein at least one of the IoT devices is grouped into more than one of the plurality of groups of IoT devices, wherein the circuitry, in operation, determines at least two groups of IoT devices to be triggered for transmission, such that any IoT device is triggered in case the IoT device is associated with:
- at least one of the at least two groups of IoT devices, or
- all of the at least two groups of IoT devices, and
optionally wherein information on whether an IoT device is triggered by being associated with at least one of the at least two groups of IoT devices indicated by the initial trigger message or by being associated with all of the at least two groups of IoT devices indicated by the initial trigger message is included in the initial trigger message or is configured as a default in the loT device.

9. The reader according to any one of claims 6 to 8, wherein the circuitry, in operation, determines another group of IoT devices that should be triggered for transmission, after the initial access procedure with the preceding triggered group of IoT devices has started or has completed,
optionally wherein the transceiver, upon receiving one message of the initial access procedure respectively from at least two IoT devices, transmits in return
- first, another message of the initial access procedure to one of the at least two IoT devices and
- then, after a time period, another message of the initial access procedure to another one of the at least two IoT devices.

10. The reader according to any one of claims 6 to 9, wherein the circuitry, in operation, generates a temporary ID for each IoT device within a group of IoT devices for use during the initial access procedure, the temporary ID being unique within a group of IoT devices,
wherein the transceiver, in operation, transmits information to the IoT devices of the group, informing each IoT device of the assigned temporary ID.

11. The reader according to any one of claims 6 to 10, wherein the circuitry, in operation, operates a trigger prohibition mechanism, according to which an IoT device is prohibited to be triggered again by another initial trigger message after having been triggered by the initial trigger message,
optionally wherein the trigger prohibition mechanism is a trigger prohibition timer, prohibiting the IoT device to be triggered for a time period after having been triggered, optionally wherein the circuitry, in operation, determines the time period used for the trigger prohibition timer based on the group indicated by the initial trigger message.

12. An Internet of Things, IoT, device comprising:
circuitry, which in operation, performs an initial access procedure with a reader, in response to receiving an initial trigger message from the reader,
the circuitry, which in operation, determines one out of a plurality of transmit occasions for transmitting a message of the triggered initial access procedure to the reader, based on a selection rule,
a transceiver, which in operation, transmits the message of the initial access procedure to the reader in the determined transmit occasion.

13. The IoT device according to claim 12, wherein the circuitry, in operation, operates a failure handling mechanism for the initial access procedure,
wherein the failure handling mechanism involves monitoring whether the initial access procedure has been successfully completed within a time period,
in case the initial access procedure has not been successfully completed within the time period, the circuitry determines to repeat full or part of the initial access procedure.

14. The IoT device according to any one of claims 12 to 13, wherein the time period starts in relation to the start of the initial access procedure, including at one of the following points in time:
- at the time of or an offset time after receiving the initial trigger message,
- at the time of or an offset time after transmitting a first message of the triggered initial access procedure,
optionally wherein the offset time is indicated by the initial trigger message or determined based on configuration information stored in advance in the IoT device,
optionally wherein the time period of the failure handling mechanism is indicated by the initial trigger message or determined based on configuration information stored in advance in the IoT device.

15. A reader comprising:
circuitry, which in operation, determines a probability of collision between messages sent by different IoT devices triggered by an initial trigger message, transmitted by the reader for triggering one or more IoT devices for transmission,
in case the determined collision probability is larger than a threshold,
- the circuitry, in operation, determines a plurality of transmit occasions usable by the IoT device for transmitting a message of an initial access procedure from the IoT device to the reader, and/or
- the circuitry, in operation, determines a selection rule usable by the IoT devices to determine one transmit occasion out of the plurality of transmit occasions for transmitting the message of the triggered initial access procedure to the reader, and
- wherein a transceiver, in operation, transmits a message to the IoT devices informing on the determined plurality of transmit occasions and/or the determined selection rule.
